# EUROPEAN PATENT APPLICATION

(11) **EP 4 270 999 A1**
(43) Date of publication of application: **01.11.2023**
(21) Application number: 22758799.5
(22) Date of filing: 17.02.2022
(51) Int. Cl.: H04W 4/06, H04W 36/00, H04W 36/08, H04W 72/00, H04W 72/04, H04W 72/08, H04L 5/00

(54) **MULTICAST/BROADCAST SERVICE COMMUNICATION METHOD, APPARATUS AND SYSTEM**

(30) Priority: 25.02.2021 CN 202110214649
(71) Applicant: Huawei Technologies Co., Ltd., Shenzhen, Guangdong 518129 (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: MERH-IP Matias Erny Reichl Hoffmann Patentanwälte PartG mbB
(86) International application number: PCT/CN2022/076695
(87) International publication number: WO 2022/179434

(57) **Abstract**

Embodiments of this application disclose a multicast/broadcast service communication method, an apparatus, and a system, to resolve a problem that access network devices across areas cannot implement an SFN in a multicast/broadcast communication scenario. The method includes: A first network element determines a quality of service flow identifier QFI of a multicast/broadcast service, and the first network element sends the QFI to at least two session management function network elements. The solution of this application may be applied to the field of communication technologies, such as artificial intelligence, an internet of vehicles, or an internet of smart home.

## Description

This application claims priority to Chinese Patent Application No. 202110214649.3, filed with the China National Intellectual Property Administration on February 25, 2021 and entitled "MULTICAST/BROADCAST SERVICE COMMUNICATION METHOD, APPARATUS, AND SYSTEM", which is incorporated herein by reference in its entirety.

### TECHNICAL FIELD

Embodiments of this application relate to the field of communication technologies, and in particular, to a multicast/broadcast service communication method, an apparatus, and a system.

### BACKGROUND

With development of a mobile internet, mobile high-definition video services are experiencing a surge. A mode of watching a video service (such as a hot program) by a user is gradually changed from a conventional mode of watching the video service by using a fixed television to a mode of watching the video service by using a terminal and a mobile network. A large quantity of users watch the video service by using the terminal and the mobile network. As a result, the video service has increasingly strong impact on the mobile network.

To resolve this problem, a multicast/broadcast (multicast/broadcast) mode is introduced. The video service is sent to the large quantity of users in the multicast/broadcast mode, so that the impact of the video service on the mobile network is greatly reduced. In a process of transmitting the video service in the multicast/broadcast manner, there are some problems that need to be urgently resolved and discussed, for example, a problem that video services received by a user across areas are asynchronous, or a problem that a video service is interrupted during a cell handover.

### SUMMARY

Embodiments of this application provide a multicast/broadcast service communication method, an apparatus, and a system, to resolve some problems that occur when a service is transmitted in a multicast/broadcast manner, for example, a problem that video services received by a user across areas are asynchronous, or a problem that a video service is interrupted during a cell handover.

For example, the problem that video services received by a user across areas are asynchronous when a service is transmitted in a multicast/broadcast manner is to be resolved. To achieve this objective, technical solutions in a first aspect and a second aspect are used in embodiments of this application. For example, the problem that a video service is interrupted during a cell handover is to be resolved. To achieve this objective, technical solutions in a tenth aspect to a twelfth aspect are used in embodiments of this application. The following describes each technical solution.

According to a first aspect, an embodiment of this application provides a multicast/broadcast service communication method. The method may include: A first network element determines a quality of service flow identifier (QoS flow identifier, QFI) of a multicast/broadcast service, and the first network element sends the QFI to at least two session management function network elements.

Based on the method in the first aspect, the first network element centrally determines the QFI of the multicast/broadcast service, and uniformly distributes the QFI to the plurality of session management function network elements in different areas, so that the different session management function network elements across areas obtain the same QFI, determine a same QoS profile based on the same QFI, and send the QoS profile to access network devices in service ranges/service areas of the session management function network elements. In this way, the access network devices in different areas obtain the same QoS profile, and establish, based on the same QoS profile, a same radio bearer resource that is for transmitting data of the multicast/broadcast service, to implement an SFN of the access network devices across areas. In other words, the data of the same multicast/broadcast service is simultaneously sent to terminals at a same frequency, to ensure that terminal users in different areas receive the data of the multicast/broadcast service, so that normal transmission of the data of the multicast/broadcast service is implemented.

In a possible design, the session management function network element is a multicast/broadcast-session management function MB-SMF or a session management function SMF. Based on this possible design, the session management function network element can be flexibly and effectively designed, to expand an application scenario of this solution.

In a possible design, the first network element is any one of the following network elements: a network exposure function NEF, a multicast/broadcast service function MBSF, a network element obtained after an NEF and an MBSF are co-deployed, or an unstructured data storage function UDSF. Based on this possible design, the first network element can be flexibly and effectively designed, to expand the application scenario of this solution.

In a possible design, that a first network element determines a QFI of a multicast/broadcast service includes: The first network element obtains, from an application server, information about the multicast/broadcast service, and determines the QFI of the multicast/broadcast service based on the information about the multicast/broadcast service. Alternatively, the first network element determines the QFI of the multicast/broadcast service based on a policy and charging control PCC rule of the multicast/broadcast service.

Based on this possible design, the QFI of the multicast/broadcast service can be flexibly and effectively determined in a plurality of manners.

In a possible design, the information about the multicast/broadcast service includes identifier information of the multicast/broadcast service, and/or requirement information of the multicast/broadcast service. Based on this possible design, the information about the multicast/broadcast service is flexibly and effectively designed.

In a possible design, that the first network element sends the QFI to at least two session management function network elements includes: The first network element sends the QFI to the at least two session management function network elements by using a PCF.

Based on this possible design, the first network element can send the QFI to the plurality of session management function network elements by using the PCF, so that an existing message transmission procedure is compatible/reused, and a system design is simplified.

According to a second aspect, an embodiment of this application provides a multicast/broadcast service communication method. The method includes: A first session management function network element receives, from a first network element, a QFI of a multicast/broadcast service, and the first session management function network element sends the QFI and a quality of service profile (QoS profile) to a first access network device based on the QFI.

In a possible design, the method further includes: A second session management function network element receives, from the first network element, the QFI of the multicast/broadcast service; and the second session management function network element sends the QFI and a QoS profile to a second access network device based on the QFI. The QoS profile sent by the second session management function network element to the second access network device is the same as the QoS profile sent by the first session management function network element to the first access network device.

Based on the method in the second aspect, the different session management function network elements across areas obtain the same QFI, determine the same QoS profile based on the same QFI, and separately send the QoS profile to the access network devices in local areas. In this way, the access network devices in different areas obtain the same QoS profile, and establish, based on the same QoS profile, a same radio bearer resource that is for transmitting data of the multicast/broadcast service, to implement an SFN of the access network devices across areas. In other words, the data of the same multicast/broadcast service is simultaneously sent to terminals at a same frequency, to ensure that terminal users in different areas receive the data of the multicast/broadcast service, so that normal transmission of the data of the multicast/broadcast service is implemented.

In a possible design, the second access network device is connected to a user plane function (user plane function, UPF) managed by the second session management function network element, and the first access network device is connected to a UPF managed by the first session management function network element.

Based on this possible design, the different access network devices are located on different user planes, so that the different access network devices simultaneously send the data of the same multicast/broadcast service to the terminal at a same frequency based on the same QoS profile, to implement the SFN.

According to a third aspect, this application provides a communication apparatus. The communication apparatus may be a first network element or a chip or a system-on-a-chip in the first network element, or may be a functional module that is in the communication apparatus and that is configured to implement the method in any one of the first aspect or the possible designs of the first aspect. The communication apparatus may implement functions performed by the communication apparatus in the foregoing aspects or the possible designs, and the functions may be implemented by hardware executing corresponding software. The hardware or the software includes one or more modules corresponding to the functions. For example, the communication apparatus may include a processing unit and a sending unit.

The processing unit is configured to determine a QFI of a multicast/broadcast service.

The sending unit is configured to send the QFI to at least two session management function network elements.

For a specific implementation of the communication apparatus, refer to a behavior function of the first network element in the multicast/broadcast service communication method provided in any one of the first aspect or the possible designs of the first aspect. Details are not described herein again. Therefore, the first network element provided in the third aspect achieves a same beneficial effect as any one of the first aspect or the possible designs of the first aspect.

According to a fourth aspect, this application provides a communication apparatus. The communication apparatus may be a first session management function network element or a chip or a system-on-a-chip in the first session management function network element, or may be a functional module that is in the communication apparatus and that is configured to implement the method in any one of the second aspect or the possible designs of the second aspect. The communication apparatus may implement functions performed by the communication apparatus in the foregoing aspects or the possible designs, and the functions may be implemented by hardware executing corresponding software. The hardware or the software includes one or more modules corresponding to the functions. For example, the communication apparatus may include a processing unit and a transceiver unit.

The processing unit is configured to control the transceiver unit to receive, from a first network element, a QFI of a multicast/broadcast service.

The processing unit is further configured to send the QFI and a QoS profile to a first access network device based on the QFI.

For a specific implementation of the communication apparatus, refer to a behavior function of the first session management function network element in the multicast/broadcast service communication method provided in any one of the second aspect or the possible designs of the second aspect. Details are not described herein again. Therefore, the first session management function network element provided in the fourth aspect achieves a same beneficial effect as any one of the second aspect or the possible designs of the second aspect.

According to a fifth aspect, a communication apparatus is provided. The communication apparatus may be a first network element or a chip or a system-on-a-chip in the first network element. The communication apparatus may implement functions performed by the first network element in the foregoing aspects or the possible designs, and the functions may be implemented by hardware. Alternatively, the communication apparatus may be a first session management function network element or a chip or a system-on-a-chip in the first session management function network element. The communication apparatus may implement functions performed by the first session management function network element in the foregoing aspects or the possible designs, and the functions may be implemented by hardware. In a possible design, the communication apparatus may include a processor and a communication interface. The processor may be configured to support the communication apparatus in implementing a function of the first network element in any one of the first aspect or the possible designs of the first aspect, or a function of the first session management function network element in any one of the second aspect or the possible designs of the second aspect.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the multicast/broadcast service communication method in any one of the first aspect or the possible designs of the first aspect, or perform the multicast/broadcast service communication method in any one of the second aspect or the possible designs of the second aspect.

According to a sixth aspect, a computer-readable storage medium is provided. The computer-readable storage medium may be a readable nonvolatile storage medium. The computer-readable storage medium stores instructions. When the instructions are run on a computer, the computer is enabled to perform the multicast/broadcast service communication method in any one of the first aspect or the possible designs of the first aspect, or perform the multicast/broadcast service communication method in any one of the second aspect or the possible designs of the second aspect.

According to a seventh aspect, a computer program product including instructions is provided. When the computer program product runs on a computer, the computer is enabled to perform the multicast/broadcast service communication method in any one of the first aspect or the possible designs of the first aspect, or perform the multicast/broadcast service communication method in any one of the second aspect or the possible designs of the second aspect.

According to an eighth aspect, a communication apparatus is provided. The communication apparatus may be a first network element or a chip or a system-on-a-chip in the first network element, or a first session management function or a chip or a system-on-a-chip in the first session management function. The communication apparatus includes one or more processors and one or more memories. The one or more memories are coupled to the one or more processors, and the one or more memories are configured to store computer program code. The computer program code includes computer instructions, and when the one or more processors execute the computer instructions, the communication apparatus is enabled to perform the multicast/broadcast service communication method in any one of the first aspect or the possible designs of the first aspect.

According to a ninth aspect, an embodiment of this application provides a communication system. The communication system may include the communication apparatus in the third aspect and the communication apparatus in the fourth aspect.

According to a tenth aspect, an embodiment of this application provides a multicast/broadcast service communication method. The method includes: A source access network device obtains first configuration information. The first configuration information is used by a terminal to receive, after the terminal is handed over to a target access network device, data that is of a multicast/broadcast service and that is transmitted on a multicast/broadcast session. The source access network device sends the first configuration information to the terminal.

Based on the method in the tenth aspect, the source access network device obtains the related configuration information of the multicast/broadcast session that is for transmitting the data of the multicast/broadcast service and that is preconfigured by the target access network device for the terminal, and sends the configuration information to the terminal, so that the terminal transmits, as soon as possible after the terminal is handed over to the target access network device, the data of the multicast/broadcast service by using a resource of the preconfigured multicast/broadcast session, to reduce an interruption delay of the multicast/broadcast service, and improve transmission efficiency of the multicast/broadcast service.

In a possible design, a transmission mode of the target access network device is an SC-PTM mode. The first configuration information is SCPTMConfiguration information, the SCPTMConfiguration information includes SC-MTCH information, and the SC-MTCH information includes mbmsSessionInfo and a g-RNTI. In other words, this technical solution is applicable to an SC-PTM scenario, and a service interruption delay during a cell handover in the SC-PTM scenario is reduced.

In a possible design, a transmission mode of the target access network device is an MBSFN mode. The first configuration information is MBSFNAreaConfiguration information, the MBSFNAreaConfiguration information includes PMCH information, the PMCH information includes a pmch-Config and an mbms-SessionInfoList, and the mbms-SessionInfoList includes information about the multicast/broadcast session. In other words, this technical solution is applicable to an MBSFN scenario, and a service interruption delay during a cell handover in the MBSFN scenario is reduced.

In a possible design, that a source access network device obtains first configuration information includes: The source access network device receives the first configuration information. The first configuration information is carried in a handover request response or a handover command. In other words, the first configuration information is carried to the source access network device by using an existing cell handover procedure, to reduce signaling overheads.

In a possible design, that the source access network device receives the first configuration information includes: The source access network device receives the first configuration information from a mobility management network element. In other words, the first configuration information is received by using a core network element, to be compatible with an existing signaling transmission procedure, reduce the signaling overheads, and simplify a system design.

In a possible design, the method further includes: The source access network device sends information about the multicast/broadcast service to the target access network device. Alternatively, the source access network device sends information about the multicast/broadcast service to the mobility management network element.

In a possible design, that the source access network device receives the first configuration information includes: The source access network device receives the first configuration information from the target access network device. In other words, the source access network device directly exchanges the first configuration information with the target access network device, to reduce a message transmission latency.

In a possible design, the method further includes: The source access network device sends information about the multicast/broadcast service to the target access network device.

In a possible design, the information about the multicast/broadcast service includes identifier information of the multicast/broadcast service, and/or QoS information of the multicast/broadcast service. The information about the multicast/broadcast service is effectively and flexibly designed, to expand an application scenario of this method.

In a possible design, the method further includes: The source access network device determines the target access network device based on a measurement report of the terminal and/or multicast/broadcast capability information of an access network device.

In a possible design, the measurement report includes the identifier information of the multicast/broadcast service. The method further includes: The source access network device sends the identifier information of the multicast/broadcast service to the mobility management network element or the target access network device. In other words, the identifier information of the multicast/broadcast service is carried in the measurement report and sent to the target access network device or a core network device, so that the target access network device or the core network device learns that the terminal joins the multicast/broadcast service. Therefore, the system design is simplified, and the signaling overheads are reduced.

According to an eleventh aspect, an embodiment of this application provides a multicast/broadcast service communication method. The method includes: A target access network device allocates a resource of a multicast/broadcast session to a terminal. The multicast/broadcast session is for transmitting data of a multicast/broadcast service. The target access network device sends first configuration information. The first configuration information represents the resource of the multicast/broadcast session, and the first configuration information is used by the terminal to receive, after the terminal is handed over to the target access network device, the data that is of the multicast/broadcast service and that is transmitted on the multicast/broadcast session.

Based on the method in the eleventh aspect, the target access network device preconfigures, for the terminal, the resource that is of the multicast/broadcast session and that is for transmitting the data of the multicast/broadcast service, and sends the configuration information to the terminal, so that the terminal transmits, as soon as possible after the terminal is handed over to the target access network device, the data of the multicast/broadcast service by using the preconfigured resource of the multicast/broadcast session, to reduce an interruption delay of the multicast/broadcast service, and improve transmission efficiency of the multicast/broadcast service.

A transmission mode of the target access network device is an SC-PTM mode or an MBSFN mode. For related descriptions of the first configuration information, refer to descriptions in the possible designs of the tenth aspect. Details are not described again.

In a possible design, that the target access network device sends first configuration information includes: The target access network device sends the first configuration information to a mobility management network element. Alternatively, the target access network device sends the first configuration information to a source access network device. Therefore, the first configuration information is flexibly and effectively sent, and an application scenario of the method is expanded.

In a possible design, the first configuration information is carried in a handover request response or a handover command. In other words, the first configuration information is transmitted by using an existing handover procedure, to reduce signaling overheads.

In a possible design, the method further includes: The target access network device receives information about the multicast/broadcast service. That a target access network device allocates a resource of a multicast/broadcast session to a terminal includes: The target access network device allocates the resource of the multicast/broadcast session to the terminal based on the information about the multicast/broadcast service, to ensure that the determined resource of the multicast/broadcast session is applicable to transmission of the data of the multicast/broadcast service.

In a possible design, the information about the multicast/broadcast service includes identifier information of the multicast/broadcast service, and/or QoS information of the multicast/broadcast service. The information about the multicast/broadcast service is effectively and flexibly designed, to expand an application scenario of this method.

According to a twelfth aspect, an embodiment of this application provides a multicast/broadcast service communication method. The method includes: A terminal receives first configuration information from a source access network device. The first configuration information represents a resource of a multicast/broadcast session, and the first configuration information is used by the terminal to receive, after the terminal is handed over to a target access network device, data that is of a multicast/broadcast service and that is transmitted on the multicast/broadcast session. The terminal receives, by using the multicast/broadcast session and based on the first configuration information, the data that is of the multicast/broadcast service and that is from the target access network device.

Based on the method in the twelfth aspect, the target access network device preconfigures, for the terminal, the resource that is of the multicast/broadcast session and that is for transmitting the data of the multicast/broadcast service, and sends the configuration information to the terminal, so that the terminal transmits, as soon as possible after the terminal is handed over to the target access network device, the data of the multicast/broadcast service by using the preconfigured resource of the multicast/broadcast session, to reduce an interruption delay of the multicast/broadcast service, and improve transmission efficiency of the multicast/broadcast service.

In a possible design, a transmission mode of the target access network device is an SC-PTM mode or an MBSFN mode. For related descriptions of the first configuration information, refer to descriptions in the possible designs of the tenth aspect. Details are not described again.

In a possible design, the method further includes: The terminal sends, to the source access network device, a measurement report including identifier information of the multicast/broadcast service. In other words, the identifier information of the multicast/broadcast service is added to the measurement report and sent to the source access network device, so that the source access network device learns that the terminal joins the multicast/broadcast service. Therefore, a system design is simplified, and signaling overheads are reduced.

In a possible design, the first configuration information is carried in a handover request response or a handover command. In other words, the first configuration information is transmitted by using an existing handover procedure, to reduce the signaling overheads.

According to a thirteenth aspect, this application provides a communication apparatus. The communication apparatus may be a source access network device or a chip or a system-on-a-chip in the source access network device, or may be a functional module that is in the communication apparatus and that is configured to implement the method in any one of the tenth aspect or the possible designs of the tenth aspect. The communication apparatus may implement functions performed by the communication apparatus in the foregoing aspects or the possible designs, and the functions may be implemented by hardware executing corresponding software. The hardware or the software includes one or more modules corresponding to the functions. For example, the communication apparatus may include a processing unit and a transceiver unit.

The processing unit is configured to control the transceiver unit to obtain first configuration information. The first configuration information is used by a terminal to receive, after the terminal is handed over to a target access network device, data that is of a multicast/broadcast service and that is transmitted on a multicast/broadcast session.

The transceiver unit is configured to send the first configuration information to the terminal.

For a specific implementation of the communication apparatus, refer to a behavior function of the source access network device in the multicast/broadcast service communication method provided in any one of the tenth aspect or the possible designs of the tenth aspect. Details are not described herein again. Therefore, the source access network device provided in the thirteenth aspect achieves a same beneficial effect as any one of the tenth aspect or the possible designs of the tenth aspect.

According to a fourteenth aspect, this application provides a communication apparatus. The communication apparatus may be a target access network device or a chip or a system-on-a-chip in the target access network device, or may be a functional module that is in the communication apparatus and that is configured to implement the method in any one of the eleventh aspect or the possible designs of the eleventh aspect. The communication apparatus may implement functions performed by the communication apparatus in the foregoing aspects or the possible designs, and the functions may be implemented by hardware executing corresponding software. The hardware or the software includes one or more modules corresponding to the functions. For example, the communication apparatus may include a processing unit and a sending unit.

The processing unit is configured to allocate a resource of a multicast/broadcast session to a terminal. The multicast/broadcast session is for transmitting data of a multicast/broadcast service.

The sending unit is configured to send first configuration information. The first configuration information represents the resource of the multicast/broadcast session, and the first configuration information is used by the terminal to receive, after the terminal is handed over to the target access network device, the data that is of the multicast/broadcast service and that is transmitted on the multicast/broadcast session.

For a specific implementation of the communication apparatus, refer to a behavior function of the target access network device in the multicast/broadcast service communication method provided in any one of the eleventh aspect or the possible designs of the eleventh aspect. Details are not described herein again. Therefore, the target access network device provided in the fourteenth aspect achieves a same beneficial effect as any one of the eleventh aspect or the possible designs of the eleventh aspect.

According to a fifteenth aspect, this application provides a communication apparatus. The communication apparatus may be a terminal or a chip or a system-on-a-chip in the terminal, or may be a functional module that is in the communication apparatus and that is configured to implement the method in any one of the twelfth aspect or the possible designs of the twelfth aspect. The communication apparatus may implement functions performed by the communication apparatus in the foregoing aspects or the possible designs, and the functions may be implemented by hardware executing corresponding software. The hardware or the software includes one or more modules corresponding to the functions. For example, the communication apparatus may include a receiving unit and a processing unit.

The receiving unit is configured to receive first configuration information from a source access network device. The first configuration information represents a resource of a multicast/broadcast session, and the first configuration information is used by the terminal to receive, after the terminal is handed over to a target access network device, data that is of a multicast/broadcast service and that is transmitted on the multicast/broadcast session.

The processing unit is configured to receive, by using the multicast/broadcast session and based on the first configuration information, the data that is of the multicast/broadcast service and that is from the target access network device.

For a specific implementation of the communication apparatus, refer to a behavior function of the terminal in the multicast/broadcast service communication method provided in any one of the twelfth aspect or the possible designs of the twelfth aspect. Details are not described herein again. Therefore, the terminal provided in the fifteenth aspect achieves a same beneficial effect as any one of the twelfth aspect or the possible designs of the twelfth aspect.

According to a sixteenth aspect, a communication apparatus is provided. The communication apparatus may be a source access network device or a chip or a system-on-a-chip in the source access network device. Alternatively, the communication apparatus may be a target access network device or a chip or a system-on-a-chip in the target access network device. Alternatively, the communication apparatus may be a terminal or a chip or a system-on-a-chip in the terminal. A function may be implemented by hardware. In a possible design, the communication apparatus may include a processor and a communication interface. The processor may be configured to support the communication apparatus in implementing a function of the source access network device in any one of the tenth aspect or the possible designs of the tenth aspect, a function of the target access network device in any one of the eleventh aspect or the possible designs of the eleventh aspect, or a function of the terminal in any one of the twelfth aspect or the possible designs of the twelfth aspect.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the multicast/broadcast service communication method in any one of the tenth aspect or the possible designs of the tenth aspect, the multicast/broadcast service communication method in any one of the eleventh aspect or the possible designs of the eleventh aspect, or the multicast/broadcast service communication method in any one of the twelfth aspect or the possible designs of the twelfth aspect.

According to a seventeenth aspect, a computer-readable storage medium is provided. The computer-readable storage medium may be a readable nonvolatile storage medium, and the computer-readable storage medium stores instructions. When the instructions are run on a computer, the computer is enabled to perform the multicast/broadcast service communication method in any one of the tenth aspect or the possible designs of the tenth aspect, the multicast/broadcast service communication method in any one of the eleventh aspect or the possible designs of the eleventh aspect, or the multicast/broadcast service communication method in any one of the twelfth aspect or the possible designs of the twelfth aspect.

According to an eighteenth aspect, a computer program product including instructions is provided. When the computer program product runs on a computer, the computer is enabled to perform the multicast/broadcast service communication method in any one of the tenth aspect or the possible designs of the tenth aspect, the multicast/broadcast service communication method in any one of the eleventh aspect or the possible designs of the eleventh aspect, or the multicast/broadcast service communication method in any one of the twelfth aspect or the possible designs of the twelfth aspect.

According to a nineteenth aspect, a communication apparatus is provided. The communication apparatus may be a first network element or a chip or a system-on-a-chip in the first network element, or a first session management function or a system-on-a-chip in the first session management function. The communication apparatus includes one or more processors and one or more memories. The one or more memories are coupled to the one or more processors, the one or more memories are configured to store computer program code, and the computer program code includes computer instructions. When the one or more processors execute the computer instructions, the communication apparatus is enabled to perform the multicast/broadcast service communication method in any one of the tenth aspect or the possible designs of the tenth aspect, the multicast/broadcast service communication method in any one of the eleventh aspect or the possible designs of the eleventh aspect, or the multicast/broadcast service communication method in any one of the twelfth aspect or the possible designs of the twelfth aspect.

According to a twentieth aspect, an embodiment of this application provides a communication system. The communication system may include the communication apparatus in the thirteenth aspect, the communication apparatus in the fourteenth aspect, and the communication apparatus in the fifteenth aspect.

### BRIEF DESCRIPTION OF DRAWINGS

FIG. 1 is a schematic diagram of a multi-area multicast/broadcast communication scenario according to an embodiment of this application;
FIG. 2 is a diagram of an architecture of a communication system according to an embodiment of this application;
FIG. 3 is a schematic diagram of an architecture of a 5G communication system according to an embodiment of this application;
FIG. 4 is a schematic diagram of compositions of a communication apparatus 400 according to an embodiment of this application;
FIG. 5 is a flowchart of a multicast/broadcast service communication method according to an embodiment of this application;
FIG. 6 is a flowchart of another multicast/broadcast service communication method according to an embodiment of this application;
FIG. 7 is a schematic diagram of compositions of a communication apparatus 70 according to an embodiment of this application;
FIG. 8 is a schematic diagram of compositions of a communication apparatus 80 according to an embodiment of this application;
FIG. 9 is a schematic diagram of compositions of a communication system according to an embodiment of this application;
FIG. 10 is a diagram of an architecture of a communication system according to an embodiment of this application;
FIG. 11a is a schematic diagram of an architecture of a 5G communication system according to an embodiment of this application;
FIG. 11b is a schematic diagram of an architecture in which a 4G network interworks with a 5G network according to an embodiment of this application;
FIG. 12 is a flowchart of a multicast/broadcast service communication method according to an embodiment of this application;
FIG. 13 is a flowchart of a multicast/broadcast service communication method according to an embodiment of this application;
FIG. 14 is a flowchart of a multicast/broadcast service communication method according to an embodiment of this application;
FIG. 15A and FIG. 15B are a flowchart of a multicast/broadcast service communication method according to an embodiment of this application;
FIG. 16 is a flowchart of a multicast/broadcast service communication method according to an embodiment of this application;
FIG. 17A and FIG. 17B are a flowchart of a multicast/broadcast service communication method according to an embodiment of this application;
FIG. 18A and FIG. 18B are a flowchart of a multicast/broadcast service communication method according to an embodiment of this application;
FIG. 19 is a schematic diagram of compositions of a communication apparatus 190 according to an embodiment of this application;
FIG. 20 is a schematic diagram of compositions of a communication apparatus 200 according to an embodiment of this application;
FIG. 21 is a schematic diagram of compositions of a communication apparatus 210 according to an embodiment of this application; and
FIG. 22 is a schematic diagram of compositions of a communication system according to an embodiment of this application.

### DESCRIPTION OF EMBODIMENTS

In a multi-area multicast/broadcast communication scenario, to ensure normal transmission of data of a multicast/broadcast service, access network devices across areas may establish a same user plane transmission channel that is for transmitting the data of the multicast/broadcast service, so that the access network devices across areas are in a single frequency network (single frequency network, SFN), and simultaneously send the data of the same multicast/broadcast service at a same frequency.

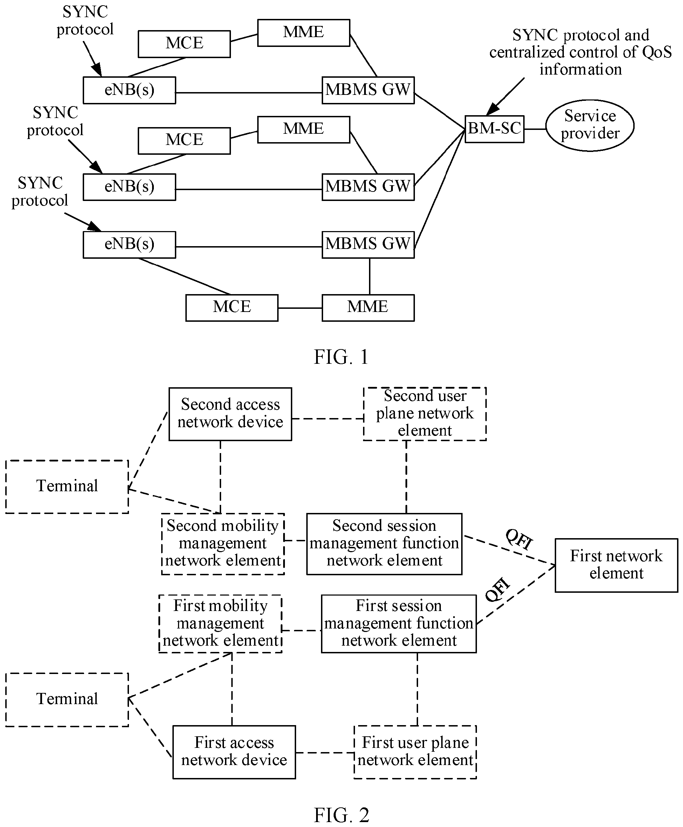

A 4^{th} generation (4^{th} generation, 4G) multicast/broadcast network architecture shown in FIG. 1 is used as an example. In the 4G multicast/broadcast network architecture, a multicast/broadcast service center (broadcast/multicast service center, BM-SC) serves as a centralized control node to perform quality of service (quality of service, QoS) control on a multicast/broadcast service. In addition, a synchronization (synchronous, SYNC) protocol is further used between the BM-SC and an access network device (for example, an enhanced NodeB (enhanced NodeB, eNB)) to ensure synchronous transmission of user plane data. For example, the BM-SC delivers QoS information in a unified manner, and delivers the QoS information to a plurality of multimedia broadcast multicast/broadcast service-gateways (multimedia broadcast multicast service-gateways, MBMS-GWs), to ensure consistency of the QoS information delivered to the plurality of MBMS-GWs. Therefore, the MBMS-GWs establish a same user plane transmission channel based on the QoS information, so that access network devices across areas are located in an SFN. To be specific, the access network devices across areas simultaneously send data of the same multicast/broadcast service at a same frequency.

Different from that in the 4G multicast/broadcast network architecture, in a 5G multicast/broadcast network architecture, a user plane network element is decoupled from a control plane network element, and the user plane network element and the control plane network element are connected to each other by using a service-oriented interface. User plane transmission channels that are for transmitting data of a multicast/broadcast service and that are established by different control plane network elements may be different. As a result, a case in which the data of the same multicast/broadcast service cannot be simultaneously transmitted to terminals at a same frequency easily occurs.

For example, in the 5G multicast/broadcast network architecture, in a multi-area multicast/broadcast-session management function (multicast/broadcast-session management function, MB-SMF) scenario, a same multicast/broadcast service is managed by different MB-SMFs. The different MB-SMFs may bind/map, based on a policy and control rule (policy and charging rule(s), PCC rule(s)) of the multicast/broadcast service, a same service data flow (service data flow, SDF) of the multicast/broadcast service to quality of service flows (QoS flows, QFs) with different quality of service flow identifiers (QoS flow identifiers, QFIs). As a result, a problem that QFIs bound/mapped to a same SDF are inconsistent occurs. Consequently, QFIs sent by MB-SMFs in different areas to an access network device and quality of service profiles (QoS profiles) corresponding to the QFIs are different.

Further, the access network device maps a radio bearer resource (for example, a data radio bearer (data radio bearer, DRB) or a multicast/broadcast radio bearer (multicast radio bearer, MRB)) based on the QoS profile corresponding to the QFI, and maps the QFI to a DRB ID or an MRB ID. Because QFIs received by different access network devices and QoS profiles corresponding to the QFIs are different, the different QFIs may be mapped to different radio bearer resources (for example, DRBs or MRBs) under management of the different access network devices. In this case, data of a same multicast/broadcast service may be transmitted to a terminal by using the different radio bearer resources. Consequently, user plane data cannot be synchronously transmitted, it cannot be ensured that access network devices across areas are located in an SFN, and the data of the same multicast/broadcast service cannot be simultaneously transmitted in a plurality of areas at a same frequency. As a result, transmission of the data of the multicast/broadcast service fails.

For example, an MB-SMF 1 in an area A and an MB-SMF 2 in an area B jointly manage a multicast/broadcast service 1, the area A corresponds to a base station 1, and the area B corresponds to a base station 2. The MB-SMF 1 in the area A may bind/map, based on a PCC rule(s) of the multicast/broadcast service 1, an SDF 1 of the multicast/broadcast service to a QoS flow whose QoS flow ID is 3, and the base station 1 maps the QF 3 to a DRB 1 or an MRB 1. The MB-SMF 2 in the area B may bind/map, based on the PCC rule(s) of the multicast/broadcast service, the SDF 1 to a QoS flow whose QoS flow ID is 7, and the base station 2 maps the QF 7 to a DRB 2 or an MRB 2. In other words, the SDF 1 of the multicast/broadcast service 1 is bound/mapped to the QoS flows with the different QoS flow IDs under management of the MB-SMFs in the different areas, and is transmitted to a terminal by using the different DRBs or MRBs.

To resolve the foregoing technical problem, an embodiment of this application provides a multicast/broadcast service communication method. The method may include: A first network element determines a QFI of a multicast/broadcast service, and sends the QFI of the multicast/broadcast service to a plurality of session management function network elements. For example, the first network element sends the QFI of the multicast/broadcast service to a first session management function network element and a second session management function network element. The first session management function network element receives the QFI, and sends, to a first access network device based on the QFI, the QFI and a QoS profile corresponding to the QFI. The second session management function network element receives the QFI of the multicast/broadcast service, and sends, to a second access network device based on the QFI, the QFI and a QoS profile corresponding to the QFI. That is, the first network element that controls the multicast/broadcast service in a centralized manner is deployed in a multicast/broadcast network architecture. The first network element generates the QFI of the multicast/broadcast service, and uniformly delivers the QFI to session management function network elements (for example, MB-SMFs) in different areas, so that the session management function network elements in the different areas can obtain the same QFI from the first network element, to ensure consistency of the QFIs sent by the session management function network elements in the different areas to access network devices and consistency of the QoS profiles corresponding to the QFIs. Therefore, it is ensured that SFNs of the access network devices in different areas can be implemented.

With reference to the accompanying drawings in this specification, the following describes the multicast/broadcast service communication method provided in this embodiment of this application.

It should be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to a similar technical problem.

FIG. 2 shows a communication system according to an embodiment of this application. As shown in FIG. 2, the communication system may include a first network element, a plurality of session management function network elements (for example, a first session management function network element and a second session management function network element), and a plurality of access network devices (for example, a first access network device and a second access network device). The plurality of session management function network elements may be located in different areas, and the session management function network element may be an MB-SMF or an SMF. Further, the communication system may include a first mobility management network element, a second mobility management network element, a first user plane network element, a second user plane network element, a terminal, and the like. The first user plane network element is connected to the first session management function network element and is managed/controlled by the first session management function network element. The second user plane network element is connected to the second session management function network element and is managed/controlled by the second session management function network element. The first access network device is connected to the first user plane network element, and the second access network device is connected to the second user plane network element.

The following describes network elements or devices in the communication system shown in FIG. 2.

The first network element may be configured to manage and control QoS information of a multicast/broadcast service, for example, a QFI of the multicast/broadcast service in a centralized manner. Specifically, the first network element may be a network exposure function (network exposure function, NEF) or a multicast/broadcast service function (multicast/broadcast service function, MBSF), may be a network element obtained after an NEF and an MBSF are co-deployed or an unstructured data storage function (unstructured data storage function, UDSF), may be another unnamed network element, or the like.

The session management function network element is mainly configured to implement a user plane transmission logical channel, for example, session management functions such as establishment, release, and change of a PDU session.

The access network device is mainly configured to implement functions such as a physical layer function, resource scheduling and management, and access control and mobility management of the terminal. The access network device may be a device supporting wired access, or may be a device supporting wireless access. For example, the access network device may be an access network (access network, AN)/a radio access network (radio access network, RAN), where the AN/RAN includes a plurality of 5G-AN/5G-RAN nodes. The 5G-AN/5G-RAN node may be an access point (access point, AP), a NodeB (NodeB, NB), an enhanced NodeB (enhanced NodeB, eNB), a next generation NodeB (NR NodeB, gNB), a transmission reception point (transmission reception point, TRP), a transmission point (transmission point, TP) or another access node.

The mobility management network element is mainly responsible for access authentication of the terminal, mobility management, signaling exchange between functional network elements, or the like, such as managing a registration status of a user, a connection status of a user, user registration and network access, tracking area update, user authentication during cell handover, and key security.

The terminal may be a device configured to implement a wireless communication function, for example, a terminal or a chip that can be used in the terminal. The terminal may be UE, an access terminal, a terminal unit, a terminal station, a mobile station, a mobile console, a remote station, a remote terminal, a mobile device, a wireless communication device, a terminal agent, a terminal apparatus, or the like in a 5G network or a future evolved communication system. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device, or wearable device connected to a wireless modem, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal at smart home (smart home), or the like. The terminal may be mobile or fixed.

The user plane network element may be used as an anchor on the user plane transmission logical channel, and is configured to complete functions such as routing and forwarding of user plane data. For example, the user plane network element establishes a channel (namely, the user plane transmission logical channel) between the user plane network element and the terminal, forwards a data packet between the terminal and the DN on the channel, and is responsible for data packet filtering, data forwarding, rate control, and generation of charging information for the terminal.

It should be noted that FIG. 2 is merely an example diagram of the architecture. In addition to the functional units shown in FIG. 2, the system may further include another functional network element, for example, an operation and management (operation and management, O&M) network element. This is not limited in this embodiment of this application. In addition, names of the devices in FIG. 2 are not limited. In addition to the names shown in FIG. 2, the devices may also have other names. For example, the names may be replaced with names of network elements having same or similar functions. This is not limited.

The system shown in FIG. 2 may be a 3rd generation partnership project (3rd generation partnership project, 3GPP) communication system, for example, a 4th generation (4th generation, 4G) communication system, a long term evolution (long term evolution, LTE) system, a 5th generation (5th generation, 5G) communication system, a new radio (new radio, NR) system, a next generation communication system, or a non-3GPP communication system. This is not limited.

It should be understood that names of a same functional network element in FIG. 2 in different communication systems may be the same or different. For example, specifically, if the communication system shown in FIG. 2 is a 4G communication system, the mobility management network element is a mobility management entity (mobility management entity, MME). If the communication system shown in FIG. 2 is a 5G communication system, the mobility management network element is an access and mobility management function (access and mobility management function, AMF).

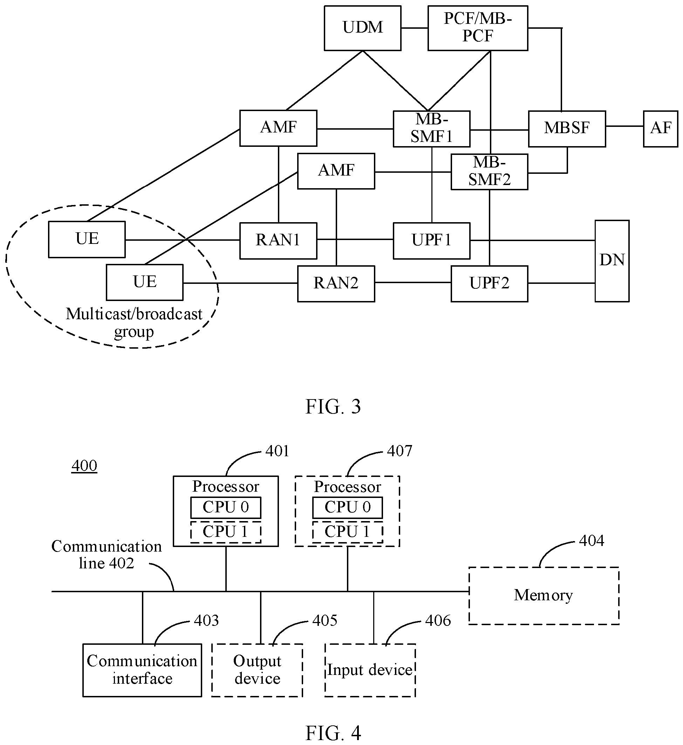

For example, the communication system shown in FIG. 2 is a 5G communication system shown in FIG. 3. As shown in FIG. 3, a network element or an entity corresponding to the session management function network element may be a multicast/broadcast-session management function (multicast/broadcast-session management function, MB-SMF) in the 5G communication system. A network element or an entity corresponding to the user plane network element may be a user plane function (user plane function, UPF) in the 5G communication system. A network element or an entity corresponding to the access network device may be a radio access network (radio access network, RAN) in the 5G communication system. A network element or an entity corresponding to the mobility management network element may be an AMF in the 5G communication system. The terminal corresponds to UE in the 5G communication system. The first network element corresponds to an MBSF in the 5G communication system.

Optionally, in this embodiment of this application, network elements such as the first network element, the session management function network elements (for example, the first session management function network element and the second session management function network element), and the access network devices (for example, the first access network device and the second access network device) may also be referred to as communication apparatuses, and each may be a general-purpose device or a dedicated device. This is not specifically limited in this embodiment of this application.

Optionally, in this embodiment of this application, related functions of the first network element and the session management function network elements (for example, the first session management function network element and the second session management function network element) may be implemented by one device, may be jointly implemented by a plurality of devices, or may be implemented by one or more functional modules in one device. This is not specifically limited in this embodiment of this application. It may be understood that the foregoing function may be a network element in a hardware device, may be a software function running on dedicated hardware, a combination of hardware and software, or a virtualization function instantiated on a platform (for example, a cloud platform).

During specific implementation, the devices in the communication system, such as the first network element and the session management function network elements (such as the first session management function network element and the second session management function network element), may all use a composition structure shown in FIG. 4, or include components shown in FIG. 4. FIG. 4 is a schematic diagram of compositions of a communication apparatus 400 according to an embodiment of this application. The communication apparatus 400 may include a processor 401, a communication line 402, and a communication interface 403. Further, the communication apparatus 400 may include a memory 404. The processor 401, the memory 404, and the communication interface 403 may be connected to each other through the communication line 402.

The processor 401 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 401 may alternatively be another apparatus having a processing function, for example, a circuit, a component, or a software module. This is not limited.

The communication line 402 is configured to transmit information between the components included in the communication apparatus 400.

The communication interface 403 is configured to communicate with another device or another communication network. The another communication network may be an Ethernet, a radio access network (radio access network, RAN), a wireless local area network (wireless local area network, WLAN), or the like. The communication interface 403 may be a module, a circuit, a transceiver, or any apparatus that can implement communication.

The memory 404 is configured to store instructions. The instructions may be a computer program.

The memory 404 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, and a Blu-ray optical disc), magnetic disk storage medium, or another magnetic storage device. This is not limited.

It should be noted that the memory 404 may exist independently of the processor 401, or may be integrated into the processor 401. The memory 404 may be configured to store instructions, program code, some data, or the like. The memory 404 may be located inside the communication apparatus 400, or may be located outside the communication apparatus 400. This is not limited.

The processor 401 is configured to execute the instructions stored in the memory 404, to implement a multicast/broadcast service communication method provided in the following embodiments of this application. For example, when the communication apparatus 400 is a session management function network element or a chip or a system-on-a-chip in the session management function network element, the processor 401 executes the instructions stored in the memory 404, to implement steps performed by a session management function network element in the following embodiments of this application. For another example, when the communication apparatus 400 is a mobility management network element or a chip or a system-on-a-chip in the mobility management network element, the processor 401 executes the instructions stored in the memory 404, to implement steps performed by a mobility management network element in the following embodiments of this application.

In an example, the processor 401 may include one or more CPUs, for example, a CPU 0 and a CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a device such as a keyboard, a mouse, a microphone, or a joystick, and the output device 405 is a device such as a display screen or a speaker (speaker).

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

In this embodiment of this application, the chip system may include a chip, or may include a chip and another discrete component.

With reference to the communication system shown in FIG. 2, the following describes the multicast/broadcast service communication method provided in embodiments of this application. Network elements in the following embodiments may have components shown in FIG. 4. Details are not described again. It should be noted that actions, terms, and the like in embodiments of this application may be mutually referenced. This is not limited. In embodiments of this application, names of messages exchanged between devices, names of parameters in the messages, or the like are merely examples. Other names may alternatively be used during specific implementation. For example, multicast/broadcast in embodiments of this application may be replaced with groupcast, broadcast, or multicast. "Determining" in embodiments of this application may also be understood as creating (create) or generating (generate), and "including" in embodiments of this application may also be understood as "carrying" or the like. Descriptions are uniformly provided herein. Details are not specifically limited in embodiments of this application.

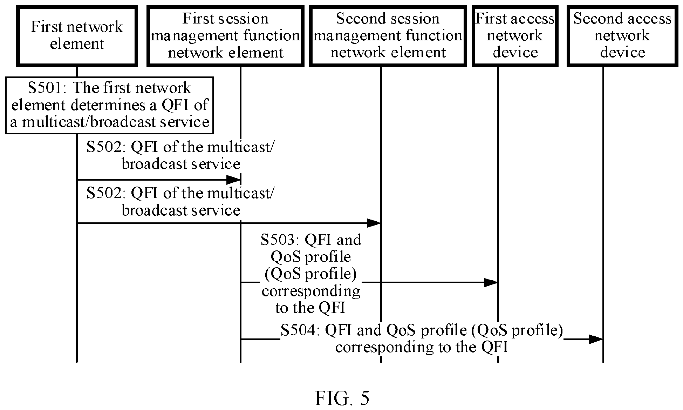

FIG. 5 shows a multicast/broadcast service communication method according to an embodiment of this application. As shown in FIG. 5, the method includes the following steps.

S501: A first network element determines a QFI of a multicast/broadcast service.

The first network element may be an NEF or an MBSF, or may be a network element obtained after an NEF and an MBSF are co-deployed, a UDSF, or the like.

The multicast/broadcast service may be a service oriented to a plurality of terminals (or user groups). For example, the multicast/broadcast service may be a command sent by a same command center or a same television program. Data of the multicast/broadcast service may be received by two or more terminals. When the data of the multicast/broadcast service is oriented to a plurality of terminals in a multicast/broadcast group, all terminals in the multicast/broadcast group may receive the data of the multicast/broadcast service after being authorized or without being authorized.

The QFI of the multicast/broadcast service may represent a quality of service flow (QoS flow, QF) to which a service data flow (service data flow, SDF) of the multicast/broadcast service is mapped/bound, a quality of service requirement of the QF, and the like. A multicast/broadcast service of one type may correspond to one or more SDFs, one SDF may be mapped to one or more QFs, one QF corresponds to one QFI, and different QFs correspond to different QFIs. The QFI of the multicast/broadcast service may be one or more. This is not limited.

For example, the first network element may determine the QFI of the multicast/broadcast service in the following manner 1 or manner 2.

Manner 1: The first network element obtains, from an application server, information about the multicast/broadcast service, and determines the QFI of the multicast/broadcast service based on the information about the multicast/broadcast service.

For example, the application server may send a first request carrying the information about the multicast/broadcast service to the first network element. The first network element receives the first request, obtains the information about the multicast/broadcast service from the first request, and determines the QFI of the multicast/broadcast service based on the information about the multicast/broadcast service.

The information about the multicast/broadcast service may include identifier information of the multicast/broadcast service, and/or requirement information of the multicast/broadcast service. Specifically, the identifier information of the multicast/broadcast service may represent the multicast/broadcast service. The identifier information of the multicast/broadcast service may include but is not limited to a temporary mobile group identity (temporary mobile group identity, TMGI) of a multicast/broadcast group, an internet protocol (internet protocol, IP) address of the application server (for example, an AF providing the multicast/broadcast service), a service identifier (service identifier, service ID) of the multicast/broadcast service, identifier information of a multicast/broadcast protocol data unit (protocol data unit, PDU) session corresponding to a multicast/broadcast group, or an identification rule of the service data flow (service data flow, SDF) of the multicast/broadcast service.

Specifically, the requirement information of the multicast/broadcast service may include the identifier information of the multicast/broadcast service, a type of the multicast/broadcast service, a requirement (such as a bandwidth requirement or a delay requirement) of the multicast/broadcast service, information (such as a generic public subscription identifier (generic public subscription identifier, GPSI) of a terminal) used by a core network device to authenticate the terminal, a service area of the multicast/broadcast service, a sending start time and a sending end time of the multicast/broadcast service, or the like. The requirement information of the multicast/broadcast service may be for determining QoS information of the multicast/broadcast service.

The application server may be a content provider (content provider, CP) or an application function (APP server, AF). The application server may provide the multicast/broadcast service for a terminal.

The first request may be for requesting a transmission resource corresponding to the multicast/broadcast service, for example, requesting to establish a multicast/broadcast session corresponding to the multicast/broadcast service. Specifically, the first request may be a multicast/broadcast session establishment request or a multicast/broadcast session configuration request, or may be a multicast/broadcast session request, a multicast/broadcast session startup request, a multicast/broadcast session activation request, or the like. This is not limited.

The QoS information of the multicast/broadcast service may be QoS information of the SDF of the multicast/broadcast service. The QoS information may include one or more of a 5^{th} generation quality of service identifier (5^{th} generation quality of service identifier, 5QI), information about an allocation and retention priority (allocation and retention priority, ARP), a maximum flow bit rate (maximum flow bit rate, MFBR), and information about a guaranteed flow bit rate (guaranteed flow bite rate, GFBR), and may further include charging policy information, other information, and the like.

In a possible design, the information about the multicast/broadcast service includes the identifier information of the multicast/broadcast service. That the first network element determines the QFI of the multicast/broadcast service based on the information about the multicast/broadcast service may include: The first network element checks, based on the identifier information of the multicast/broadcast service, whether a QFI corresponding to the identifier information of the multicast/broadcast service exists locally. If the QFI corresponding to the identifier information of the multicast/broadcast service exists locally, the QFI corresponding to the identifier information of the multicast/broadcast service is determined as the QFI of the multicast/broadcast service. If the QFI corresponding to the identifier information of the multicast/broadcast service does not exist locally, the first network element sends the identifier information of the multicast/broadcast service to the PCF, obtains a PCC rule of the multicast/broadcast service from the PCF, and determines the QFI of the multicast/broadcast service based on the PCC rule. Further, the first network element may store a correspondence between the identifier information of the multicast/broadcast service and the QFI.

In this possible design, for related descriptions of the PCC rule and a manner in which the first network element determines the QFI of the multicast/broadcast service based on the PCC rule, refer to the following manner 2.

In another possible design, the information about the multicast/broadcast service includes the requirement information of the multicast/broadcast service. That the first network element determines the QFI of the multicast/broadcast service based on the information about the multicast/broadcast service may include: The first network element determines the QoS information of the multicast/broadcast service based on the requirement information of the multicast/broadcast service, maps/binds the SDF of the multicast/broadcast service to the QF based on the QoS information of the multicast/broadcast service, where QoS information of the QF is the same as QoS information of the SDF mapped/bound to the QF, and allocates a QFI to the QF, to be specific, binds a correspondence between the QoS information of the SDF and the QFI, for example, a correspondence between a 5QI, an ARP, and the like in information about the SDF and the QFI.

It should be noted that, in this possible design, before the first network element receives the requirement information of the multicast/broadcast service from the application server, if the first network element has received the requirement information of the multicast/broadcast service from the application server, and determines the QFI of the multicast/broadcast service based on the requirement information of the multicast/broadcast service, after the first network element receives the requirement information of the multicast/broadcast service from the application server again, the first network element determines, through comparison, whether the requirement information of the multicast/broadcast service that is received again is the same as the requirement information of the multicast/broadcast service that is received earlier, that is, whether the requirement information of the multicast/broadcast service is updated. If the requirement information of the multicast/broadcast service is not updated, the earlier determined QFI is used as the QFI of the multicast/broadcast service in S501. If the requirement information of the multicast/broadcast service is updated, the another possible design manner is performed.

In still another possible design, the information about the multicast/broadcast service includes the identifier information of the multicast/broadcast service and the requirement information of the multicast/broadcast service. That the first network element determines the QFI of the multicast/broadcast service based on the information about the multicast/broadcast service may include: The first network element determines the QoS information of the multicast/broadcast service based on the requirement information of the multicast/broadcast service, and determines the QFI of the multicast/broadcast service based on the QoS information of the multicast/broadcast service. For a determining manner, refer to descriptions of the another possible design. Details are not described again. Further, the first network element stores a correspondence between the identifier information of the multicast/broadcast service and the QFI of the multicast/broadcast service.

Manner 2: The first network element determines the QFI of the multicast/broadcast service based on a policy and charging control (policy and charging control, PCC) rule of the multicast/broadcast service.

For related descriptions of the PCC rule, refer to descriptions in an existing standard. For example, the PCC rule may include an SDF template, the SDF template may include one or more SDF filters, and the SDF filter is configured to obtain, through filtering, an SDF sent by an application server. The SDF module may further include QoS information of the SDF of the multicast/broadcast service (which is alternatively referred to as QoS information of the multicast/broadcast service). The QoS information of the multicast/broadcast service is described in the manner 1, and details are not described again.

The PCC rule may be generated by a PCF based on requirement information of the multicast/broadcast service, and is locally stored by the PCF. For example, the PCF may locally store the PCC rule of the multicast/broadcast service and identifier information of the multicast/broadcast service correspondingly. The requirement information of the multicast/broadcast service may be obtained by the PCF from the application server providing the multicast/broadcast service. Related descriptions of the requirement information of the multicast/broadcast service are described in the foregoing manner 1, and details are not described again.

Specifically, the first network element may obtain the PCC rule from the PCF, determine a filtered SDF based on the SDF template in the PCC rule, map/bind the SDF to the QF based on QoS information of the SDF, where QoS information of the QF is the same as the QoS information of the SDF mapped/bound to the QF, and allocate a QFI to the QF, to be specific, binds a correspondence between the QoS information of the SDF and the QFI, for example, a correspondence between a 5QI, an ARP, and the like in information about the SDF and the QFI.

For example, it is assumed that the multicast/broadcast service includes an SDF 1, an SDF 2, and an SDF 3. The first network element may map/bind the SDF 1 and the SDF 2 to a QF 1 and map/bind the SDF 3 to a QF 2 in the manner 1 or the manner 2. In other words, the first network element determines that the QFI of the multicast/broadcast service includes the QF 1 and the QF 2. Further, the first network element may further store a correspondence between {QF 1, QF 2} and the identifier information of the multicast/broadcast service.

S502: The first network element sends the QFI of the multicast/broadcast service to a plurality of session management function network elements.

For example, the first network element sends the QFI of the multicast/broadcast service to a first session management function network element, and sends the QFI of the multicast/broadcast service to a second session management function network element.

The session management function network element may be an MB-SMF or an SMF. This is not limited. Service ranges/service areas of different session management function network elements may be different. For example, a service range/service area of the first session management function network element is an area A, and a service range/service area of the second session management function network element is an area B. The area B is different from the area A, and the two areas do not overlap. The first session management function network element may be connected to a user plane network element in an area A, manage the user plane network element in the area A, and control the user plane network element in the area A to establish, with an access network device in the area A, a transmission channel of the multicast/broadcast service. The second session management function network element may be connected to a user plane network element in an area B, manage the user plane network element in the area B, and control the user plane network element in the area B to establish, with an access network device in the area B, a transmission channel of the multicast/broadcast service.

For example, the first network element may receive a request that is of the first session management function network element and that carries the identifier information of the multicast/broadcast service, and send the QFI of the multicast/broadcast service to the first session management function network element based on the identifier information of the multicast/broadcast service and the locally stored correspondence between the identifier information of the multicast/broadcast service and the QFI. Similarly, the first network element may send the QFI of the multicast/broadcast service to the second session management function network element in this manner.

For example, the first network element sends the QFI of the multicast/broadcast service to the first session management function network element. In a possible design, the first network element may directly send the QFI of the multicast/broadcast service to the first session management function network element. In another possible design, the first network element may send the QFI of the multicast/broadcast service to the first session management function network element by using a PCF or another intermediate network element.

The PCF may be an MB-PCF that manages the first session management function network element. The first network element sends the QFI of the multicast/broadcast service to the first session management function network element by using the PCF may include: After receiving the request that is sent by the first session management function network element and that carries the identifier information of the multicast/broadcast service, the first network element queries a binding support function (binding support function, BSF) based on the identifier information of the multicast/broadcast service, to obtain an MB-PCF that manages the multicast/broadcast service, and sends the identifier information of the multicast/broadcast service and the QFI of the multicast/broadcast service to the MB-PCF. The MB-PCF sends the QFI of the multicast/broadcast service to the MB-SMF based on the identifier information of the multicast/broadcast service.

The BSF stores a correspondence between the identifier information of the multicast/broadcast service and identifier information of the PCF. A policy association is established between the PCF and a corresponding session management function network element (such as the MB-SMF) that manages the multicast/broadcast service. The identifier information of the multicast/broadcast service and identifier information of the session management function network element may be correspondingly stored in a UDM. The PCF may send the identifier information of the multicast/broadcast service to the UDM, obtain the identifier information of the session management function network element from the UDM, and send the QFI of the multicast/broadcast service to the MB-SMF based on the identifier information of the session management function network element.

S503: The first session management function network element receives the QFI of the multicast/broadcast service, and sends, to a first access network device based on the QFI, the QFI and a QoS profile corresponding to the QFI.

The first access network device may be connected to the user plane network element managed/controlled by the first session management function network element. The first access network device may establish, with the user plane network element managed/controlled by the first session management function network element, a user plane transmission channel for transmitting the data of the multicast/broadcast service.

The QoS profile corresponding to the QFI may also be named QoS configuration information, QoS information, or the like. The QoS profile corresponding to the QFI may represent a transmission quality requirement of a QF identified by the QFI, for example, information such as a transmission bit rate, a transmission delay, or a priority of the QF. Specifically, the QoS profile corresponding to the QFI is QoS information of an SDF bound to the QF identified by the QFI. The first session management function network element may obtain a binding relationship between the SDF and the QFI from the first network element, obtain the QoS information of the SDF from the first network element or the PCF, and use, based on the binding relationship between the SDF and the QFI, the QoS information of the SDF as the QoS profile corresponding to the QFI.

For example, that the first session management function network element sends, to a first access network device based on the QFI, the QFI and a QoS profile corresponding to the QFI may include: The first session management function network element determines, based on the QFI of the multicast/broadcast service, the QoS profile corresponding to the QFI, carries the QFI and the QoS profile corresponding to the QFI in an N2 session management (N2 session management, N2 SM) message, and sends the N2 SM information to a first mobility management network element through Namf_Communication_N1N2MessageTransfer. The first mobility management network element receives the Namf_Communication_N1N2MessageTransfer, obtains, from the Namf_Communication_N1N2MessageTransfer, the N2 SM information that carries the QFI and the QoS profile corresponding to the QFI, and sends the obtained N2 SM information to the first access network device.

Further, the first access network device receives the N2 SM information, obtains the QFI and the QoS profile corresponding to the QFI from the N2 SM information, and configures, based on the QoS profile corresponding to the QFI, a radio bearer resource for transmitting the data of the multicast/broadcast service. A transmission quality requirement of the radio bearer resource satisfies the QoS profile corresponding to the QFI. The radio bearer resource may be for a DRB ID or an MRB ID. A radio resource bearer configuration may include but is not limited to one or more of a packet data convergence protocol (packet data convergence protocol, PDCP) layer configuration, a radio link control (radio link control, RLC) layer configuration, a media access control (media access control, MAC) layer configuration, a physical (physical, PHY) layer configuration, a logical channel configuration, a transmission channel configuration, or a physical channel configuration.

S504: The second session management function network element receives the QFI of the multicast/broadcast service, and sends, to a second access network device based on the QFI, the QFI and a QoS profile corresponding to the QFI.

For example, the QFI received by the second session management function network element is the same as the QFI received by the first session management function network element, and the QoS profile that corresponds to the QFI and that is sent by the second session management function network element to the second access network device is the same as the QoS profile sent by the first session management function network element to the first access network device.

Specifically, for an execution process of S504, refer to S503. Details are not described again.

Further, after receiving the QFI and the QoS profile corresponding to the QFI, the second access network device may configure, based on the QoS profile corresponding to the QFI, a radio bearer resource for transmitting the data of the multicast/broadcast service. For a specific configuration process, refer to a process in which the first access network device configures, based on the QoS profile corresponding to the QFI, the radio bearer resource for transmitting the data of the multicast/broadcast service. Details are not described again.

Based on the method shown in FIG. 5, the first network element may centrally determine the QFI of the multicast/broadcast service, and uniformly distribute the QFI to the session management function network elements in different areas, so that the different session management function network elements across areas obtain the same QFI, determine the same QoS profile based on the same QFI, and send the QoS profile to the access network devices in the service ranges/service areas of the session management function network elements. In this way, the access network devices in different areas obtain the same QoS profile, and establish, based on the same QoS profile, a same radio bearer resource that is for transmitting data of the multicast/broadcast service, to implement an SFN of the access network devices across areas. In other words, the data of the same multicast/broadcast service is simultaneously sent at a same frequency, to ensure normal transmission of the data of the multicast/broadcast service.

It can be learned that S501 is described by using an example in which the first network element directly determines the QFI of the multicast/broadcast service. Alternatively, the first network element may determine one or more of the following information: a quantity of QFs corresponding to the multicast/broadcast service, detection information of the SDF of the multicast/broadcast service, policy control information (such as a 5QI, an ARP, or charging policy information) of the multicast/broadcast service, a PCC rule (such as a QFI in the PCC rule), a subset (a QFI in the subset of the PCC rule) of the PCC rule, or the like. The first network element sends the information to a plurality of MB-SMFs, so that the plurality of MB-SMFs learn, based on the information, that QFIs of the multicast/broadcast services are the same, and the obtained QFIs correspond to a same QoS profile. In this way, the access network devices in different areas configure, based on the QoS profile corresponding to the same QFI, a same radio bearer resource for transmitting the data of the multicast/broadcast service, to ensure implementation of the SFN.

The detection information of the multicast/broadcast service may be for filtering/detecting data that is of the multicast/broadcast service and that is delivered by the application server. Specifically, the detection information of the multicast/broadcast service may include quintuple information corresponding to the multicast/broadcast service. If quintuple information in a received data packet is the same as the quintuple information corresponding to the multicast/broadcast service, it is considered that data in the data packet is the data of the multicast/broadcast service, and the data packet is a data packet corresponding to the multicast/broadcast service. Otherwise, it is considered that the data packet does not carry the data of the multicast/broadcast service, and is not the data packet corresponding to the multicast/broadcast service.

Further, in an implementation scenario shown in FIG. 5, the foregoing method further includes: If the QoS information of the multicast/broadcast service is updated, the first network element determines the QFI of the multicast/broadcast service based on updated QoS information, that is, performing S501 to S504 again.

For example, the application server updates a configuration of the multicast/broadcast service, and the application server sends updated requirement information of the multicast/broadcast service to the first network element. The first network element may generate new QoS information based on the new requirement information, determine a new QFI based on the new QoS information, and send the new QFI to the plurality of session management function network elements.

In this way, when the QoS information of the multicast/broadcast service is updated, the first network element updates the QFI of the multicast/broadcast service, and sends the updated QFI to the plurality of MB-SMFs, so that the access network device configures, based on a QoS profile corresponding to the updated QFI, a radio bearer resource for transmitting the data of the multicast/broadcast service, to ensure that the configured radio bearer resource satisfies a transmission requirement of the multicast/broadcast service.

With reference to the 5G communication system shown in FIG. 2, the following describes, by assuming that the first network element is an MBSF, the first session management function network element is an MB-SMF 1, the second session management function network element is an MB-SMF 2, the first access network device is a gNB 1, and the second access network device is a gNB 2, the method shown in FIG. 5. Details are as follows:

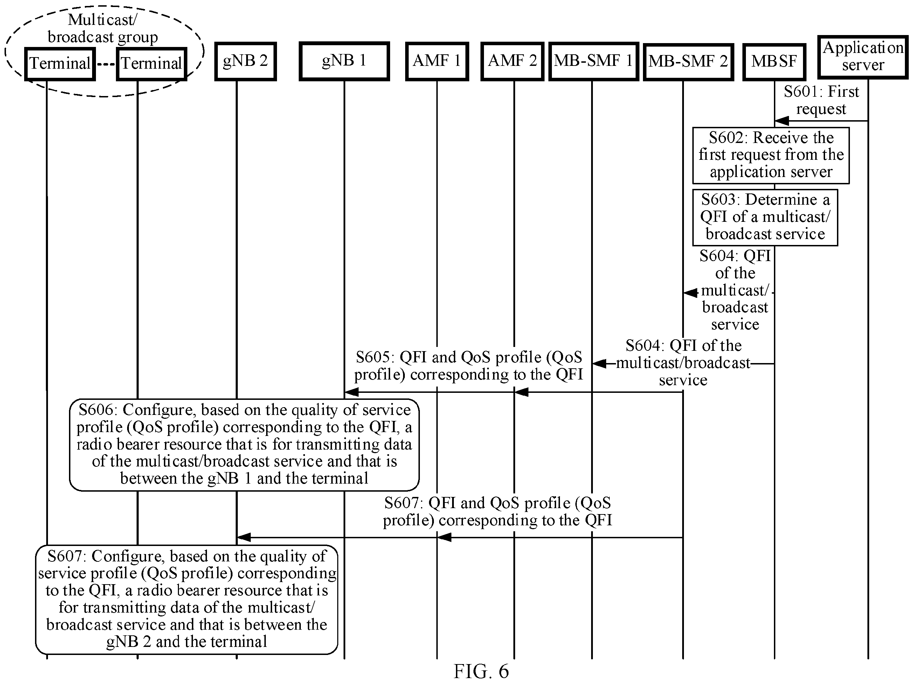

FIG. 6 shows a multicast/broadcast service communication method according to an embodiment of this application. As shown in FIG. 6, the method may include the following steps.

S601: An application server sends a first request to an MBSF.

The first request may carry identifier information of a multicast/broadcast service and/or requirement information of the multicast/broadcast service. For related descriptions of the identifier information of the multicast/broadcast service and the requirement information of the multicast/broadcast service, refer to descriptions in S501.

For example, the application server may directly send the first request to the MBSF, or may send the first request to the MBSF via an intermediate network element. For example, when the MBSF and an NEF are not co-deployed, in other words, the MBSF and the NEF are separately deployed, the application server may send the first request to the NEF, and the NEF forwards the first request to the MBSF.

Optionally, to ensure system security, before the application server sends the first request to the MBSF, the application server may register information about the application server with the MBSF. For example, the application server may send a registration request to the MBSF, where the registration request carries the identifier information of the multicast/broadcast service and identifier information of the application server. Further, after receiving the registration request, the MBSF stores the identifier information of the application server in a local registration list, where the registration list corresponds to the multicast/broadcast service. For example, there is a correspondence between the registration list and the identifier information of the multicast/broadcast service. In this way, after receiving the first request sent by the application server, the MBSF may query the registration list. If the application server is in the registration list, the MBSF identifies the application server as a legal device, receives the first request, and provides a network service for the application server.

S602: The MBSF receives the first request from the application server.

Optionally, the MBSF performs authentication and authorization on the application server. If the authentication and authorization succeed, subsequent S603 to S608 are performed.

For example, that the MBSF performs authentication and authorization on the application server may include: The MBSF obtains the identifier information of the multicast/broadcast service from the first request, finds, based on the identifier information of the multicast/broadcast service, the locally stored registration list corresponding to the identifier information of the multicast/broadcast service, and checks whether the registration list includes the identifier information of the application server. If the registration list includes the identifier information of the application server, the authentication and authorization succeed. Otherwise, if the registration list does not include the identifier information of the application server, the authentication and authorization fail.

S603: The MBSF determines a QFI of the multicast/broadcast service.

For an execution process of S603, refer to descriptions in the manner 1 in S501. Details are not described again.

S604: The MBSF sends the QFI of the multicast/broadcast service to an MB-SMF 1, and sends the QFI of the multicast/broadcast service to an MB-SMF 2.

In an example, the MBSF may send, to a second network element (for example, a UDR or a UDM), a request message carrying the identifier information of the multicast/broadcast service, where the request message is for requesting an MB-SMF that supports the multicast/broadcast service. The second network element receives the request message, and sends identifier information of the MB-SMF 1 and identifier information of the MB-SMF 2 to the MBSF. The MBSF sends the QFI of the multicast/broadcast service to the MB-SMF 1 via an AMF 1 based on the identifier information of the MB-SMF 1, and sends the QFI of the multicast/broadcast service to the MB-SMF 2 via an AMF 2 based on the identifier information of the MB-SMF 2.

In another example, the MBSF may query a BSF to obtain an MB-PCF, and send the QFI of the multicast/broadcast service to the MB-PCF. The MB-PCF obtains identifier information of the MB-SMF 1 and identifier information of the MB-SMF 2 from a second network element, and sends the QFI of the multicast/broadcast service to the MB-SMF 1 and the MB-SMF 2 based on the identifier information of the MB-SMF 1 and the identifier information of the MB-SMF 2.

The second network element stores context information of the multicast/broadcast service, and the context information of the multicast/broadcast service includes a correspondence between the identifier information of the multicast/broadcast service and identifier information of an MB-SMF that supports the multicast/broadcast service.

S605: The MB-SMF 1 receives the QFI of the multicast/broadcast service, and sends, to a gNB 1 based on the QFI of the multicast/broadcast service, the QFI and a QoS profile corresponding to the QFI.

Further, the MB-SMF 1 configures, based on the QFI of the multicast/broadcast service and other information, a PDR, an FAR, or the like that is of the multicast/broadcast service and that corresponds to the multicast/broadcast service. The MB-SMF 1 allocates endpoint information (for example, a GTP-U and an IP address of an MB-UPF 1) of the MB-UPF 1 based on the QFI of the multicast/broadcast service, and notifies the application server of the allocated endpoint information of the MB-UPF 1, so that the application server transmits data of the multicast/broadcast service to the MB-UPF 1 based on the endpoint information of the MB-UPF 1. In addition, the MB-SMF 1 sends the PDR, the FAR, or the like of the multicast/broadcast service to the MB-UPF 1, so that the MB-UPF 1 establishes a transmission channel between the MB-UPF 1 and the gNB 1.

S606: The gNB 1 receives the QFI and the QoS profile corresponding to the QFI, and configures, based on the QoS profile corresponding to the QFI, a radio bearer resource that is between the gNB 1 and a terminal and that is for transmitting the data of the multicast/broadcast service.

The radio bearer resource may be a DRB (or an MRB).

Further, the gNB 1 allocates an ID to the DRB (or the MRB), and binds the QFI to the DRB ID (or the MRB ID).

S607: The MB-SMF 2 receives the QFI of the multicast/broadcast service, and sends, to a gNB 2 based on the QFI of the multicast/broadcast service, the QFI and a QoS profile corresponding to the QFI.

Further, the MB-SMF 2 configures, based on the QFI of the multicast/broadcast service and other information, a PDR, an FAR, or the like that is of the multicast/broadcast service and that corresponds to the multicast/broadcast service. The MB-SMF 2 allocates endpoint information (for example, a GTP-U and an IP address of an MB-UPF 2) of the MB-UPF 2 based on the QFI of the multicast/broadcast service, and notifies the application server of the allocated endpoint information of the MB-UPF 2, so that the application server transmits data of the multicast/broadcast service to the MB-UPF 2 based on the endpoint information of the MB-UPF 2. In addition, the MB-SMF 2 sends the PDR, the FAR, or the like of the multicast/broadcast service to the MB-UPF 2, so that the MB-UPF 2 establishes a transmission channel between the MB-UPF 2 and the gNB 2.

S608: The gNB 2 receives the QFI and the QoS profile corresponding to the QFI, and configures, based on the QoS profile corresponding to the QFI, a radio bearer resource that is between the gNB 2 and a terminal and that is for transmitting the data of the multicast/broadcast service.

The radio bearer resource may be a DRB (or an MRB).

Further, the gNB 2 allocates an ID to the DRB (or the MRB), and binds the QFI to the DRB ID (or the MRB ID).

Based on the method shown in FIG. 6, the MBSF centrally determines the QFI of the multicast/broadcast service, and uniformly sends the QFI to the MB-SMFs in different areas, so that the different MB-SMFs across areas obtain the same QFI, and send the same QoS profile corresponding to the QFI to the gNBs in different areas. Therefore, the gNBs across areas establish, based on the same QoS profile, a same radio bearer resource that is for transmitting the data of the multicast/broadcast service, to implement an SFN across areas, in other words, simultaneously send the data of the same multicast/broadcast service at a same frequency.

The foregoing mainly describes the solutions provided in embodiments of this application from a perspective of interaction between nodes. It may be understood that to implement the foregoing functions, each network element, for example, the first network element or the session management function network element, includes a corresponding hardware structure and/or software module for implementing each function. A person skilled in the art should be easily aware that algorithm steps in examples described with reference to embodiments disclosed in this specification can be implemented in a form of hardware, software, or a combination of hardware and computer software in the methods in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the first network element or the session management function network element may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

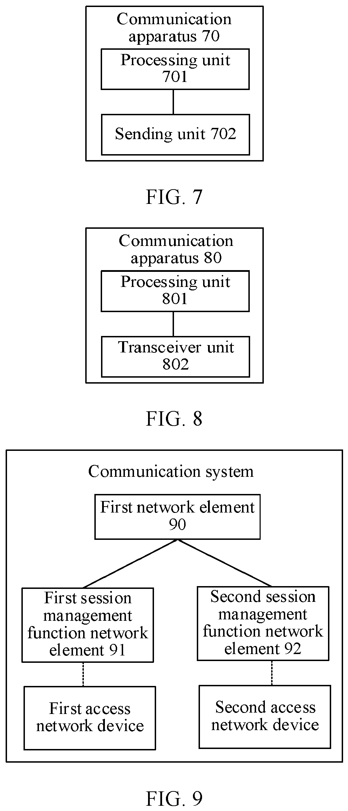

FIG. 7 is a diagram of a structure of a communication apparatus 70. The communication apparatus 70 may be a first network element, a chip or a system-on-a-chip in the first network element, another apparatus that can implement a function of the first network element in the foregoing methods, or the like. The communication apparatus 70 may be configured to perform a function of the first network element in the foregoing method embodiments. In a possible implementation, the communication apparatus 70 shown in FIG. 7 includes a processing unit 701 and a sending unit 702.

The processing unit 701 is configured to determine a QFI of a multicast/broadcast service. For example, the processing unit 701 may be configured to support the communication apparatus 70 in performing S501 or S603.

The sending unit 702 is configured to send the QFI of the multicast/broadcast service to a plurality of session management function network elements. For example, the sending unit 702 may be configured to support the communication apparatus 70 in performing S502 or S604.

Specifically, all related content of the steps in the foregoing method embodiments shown in FIG. 5 and FIG. 6 may be cited in function descriptions of the corresponding functional modules. Details are not described herein again. The communication apparatus 70 is configured to perform a function of the first network element in the multicast/broadcast service communication method shown in the methods shown in FIG. 5 and FIG. 6, to achieve effect the same as that of the multicast/broadcast service communication method.

In another implementation, the communication apparatus 70 shown in FIG. 7 includes a processing module and a communication module. The processing module is configured to control and manage an action of the communication apparatus 70. For example, the processing module may integrate a function of the processing unit 701, and may be configured to support the communication apparatus 70 in performing a step such as S501 or S603. The communication module may integrate a function of the sending unit 702, and communicate with another network entity, for example, communicate with a functional module or a network entity shown in any communication system in FIG. 2 and FIG. 3. Further, the communication apparatus 70 may further include a storage module, configured to store instructions and/or data. When the instructions are executed by the processing module, the processing module is enabled to implement the method on a side of the first network element.

The processing module may be a processor, a controller, a module, or a circuit. The processing module may implement or execute various example logical blocks described with reference to content disclosed in embodiments of this application. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 70 in this embodiment of this application may be the communication apparatus shown in FIG. 4.

FIG. 8 is a diagram of a structure of a communication apparatus 80. The communication apparatus 80 may be a session management function network element (for example, a first session management function network element), a chip or a system-on-a-chip in the session management function network element, another apparatus that can implement a function of the session management function network element in the foregoing methods, or the like. The communication apparatus 80 may be configured to perform a function of the session management function network element in the foregoing method embodiments. In a possible implementation, the communication apparatus 80 shown in FIG. 8 includes a processing unit 801 and a transceiver unit 802.

The processing unit 801 is configured to control the transceiver unit 802 to receive, from a first network element, a QFI of a multicast/broadcast service, and send the QFI and a QoS profile corresponding to the QFI to an access network device. For example, the processing unit 801 may be configured to support the communication apparatus 80 in performing S503 and S504, or S605 and S607.

Specifically, all related content of the steps in the foregoing method embodiments shown in FIG. 5 and FIG. 6 may be cited in function descriptions of the corresponding functional modules. Details are not described herein again. The communication apparatus 80 is configured to perform a function of the session management function network element in the multicast/broadcast service communication method shown in the methods shown in FIG. 5 and FIG. 6. Therefore, effect the same as that of the foregoing multicast/broadcast service communication method can be achieved.

In another implementation, the communication apparatus 80 shown in FIG. 8 includes a processing module and a communication module. The processing module is configured to control and manage an action of the communication apparatus 80. For example, the processing module may integrate a function of the processing unit 801, and may be configured to support the communication apparatus 80 in performing steps such as S503 and S504, or S605 and S607. The communication module may integrate a function of the transceiver unit 802, and communicate with another network entity, for example, communicate with a functional module or a network entity shown in any communication system in FIG. 2 and FIG. 3. Further, the communication apparatus 80 may further include a storage module, configured to store instructions and/or data. When the instructions are executed by the processing module, the processing module is enabled to implement the method on a side of the session management function network element.

The processing module may be a processor, a controller, a module, or a circuit. The processing module may implement or execute various example logical blocks described with reference to content disclosed in embodiments of this application. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 80 in this embodiment of this application may be the communication apparatus shown in FIG. 4.

FIG. 9 is a diagram of a structure of a communication system according to an embodiment of this application. As shown in FIG. 9, the communication system may include a first network element 90, a first session management function network element 91, and a second session management function network element 92. Further, the communication system may further include a first access network device and a second access network device. It should be noted that FIG. 9 is merely an example of an accompanying drawing. Network elements included in the communication system shown in FIG. 9 and a quantity of the network elements are not limited in this embodiment of this application.

The first network element 90 has a function of the first network element in the method shown in FIG. 5 or FIG. 6. The first session management function network element 91 and the second session management function network element 92 have functions of the first session management function network element and the second session management function network element in the method shown in FIG. 5 or FIG. 6.

In a multicast/broadcast communication scenario, the following problem further exists. A terminal may move to perform cell handover, for example, hand over from one access network device to another access network device. The terminal can obtain radio bearer configuration information of a multicast/broadcast service only after the terminal enters a target cell from a source cell, and receive data of the multicast/broadcast service based on the obtained radio bearer configuration information corresponding to the multicast/broadcast service. As a result, the multicast/broadcast service performed by the terminal is interrupted.

For example, for a cell of a single-cell point-to-multipoint (single-cell point-to-multipoint, SC-PTM) mode, only after entering a target cell, UE reads a system message (for example, a master information block (master information block, MIB)-system information block (system information block 1, SIB1)-SIB20), obtains a position of a single-cell multicast-control channel (single-cell multicast-control channel, SC-MCCH) (for example, a position of the SC-MCCH in time domain and frequency domain) from the system message, obtains single-cell point-to-multipoint configuration (SCPTMConfiguration) information at a time-frequency position of the SC-MCCH, obtains a single-cell multicast-radio bearer (single-cell multicast-radio bearer, SC-MRB) configuration from the SCPTMConfiguration information, and receives data of a multicast/broadcast service based on the SC-MRB configuration. The multicast/broadcast service is interrupted within duration in which the terminal enters the target cell and obtains the radio bearer configuration information corresponding to the multicast/broadcast service.

For another example, for a multicast/broadcast single frequency network (multicast/broadcast single frequency network, MBSFN) cell, only after entering a target cell, UE reads MIB-SIB1-SIB13-SystemInformationBlockType13, obtains position information of a multicast control channel (multicast control channel, MCCH) (for example, a position of the MCCH in time domain and frequency domain) from the MIB-SIB1-SIB13-SystemInformationBlockType13, obtains groupcast/multicast single frequency network area configuration (MBSFNAreaConfiguration) information at the position of the MCCH, obtains an MRB configuration from the MBSFNAreaConfiguration information, and receives data of a multicast/broadcast service based on the MRB configuration. The multicast/broadcast service is interrupted within duration in which the terminal enters the target cell and obtains the radio bearer configuration information corresponding to the multicast/broadcast service.

To avoid interruption of the multicast/broadcast service when the terminal performs cell handover, an embodiment of this application provides a multicast/broadcast service communication method. The method may include: A target access network device allocates a resource of a multicast/broadcast session to a terminal. The multicast/broadcast session is for transmitting data of a multicast/broadcast service. The target access network device sends first configuration information. The first configuration information represents the resource of the multicast/broadcast session, and the first configuration information is used by the terminal to synchronize with the multicast/broadcast session after being handed over to the target access network device. A source access network device obtains the first configuration information, and sends the first configuration information to the terminal. The terminal receives the first configuration information from the source access network device, and receives, by using the multicast/broadcast session and based on the first configuration information, the data that is of the multicast/broadcast service and that is from the target access network device. In this way, before or in a process in which the terminal is handed over to the target access network device, the resource of the multicast/broadcast session may be allocated to/configured for the terminal in advance, so that after the terminal is handed over to the target access network device, the terminal can continue to transmit the data of the multicast/broadcast service by using the allocated resource of the multicast/broadcast session, and an interruption delay of the multicast/broadcast service is reduced.

An access network device corresponding to a source cell may be referred to as the source access network device, and an access network device corresponding to a target cell may be referred to as the target access network device. The source cell and the target cell may correspond to a same access network device or different access network devices. This is not limited. In this embodiment of this application, when the source cell and the target cell correspond to different access network devices, radio access technologies (radio access technologies, RATs) supported by the different access network devices may be the same or different. In this embodiment of this application, the RAT may include an LTE technology or an NR technology.

The following describes the foregoing multicast/broadcast service communication method with reference to the accompanying drawings in this specification.

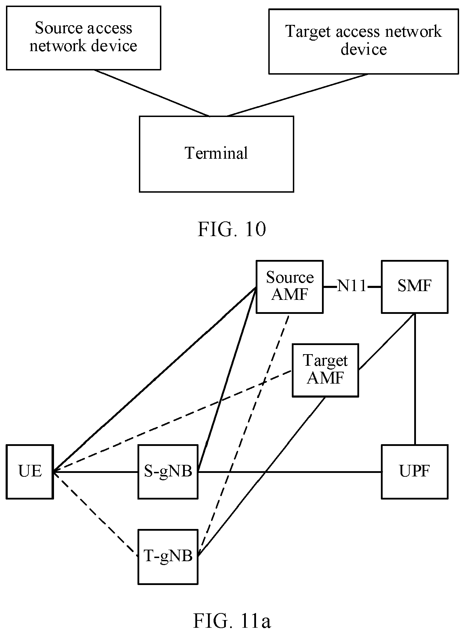

FIG. 10 shows a communication system according to an embodiment of this application. As shown in FIG. 10, the communication system may include a source access network device, a target access network device, and a terminal. The source access network device may be an access network device connected to the terminal before the terminal performs cell handover, and the target access network device may be an access network device connected to the terminal after the terminal performs cell handover. The source access network device and the target access network device may be located in a same communication system, or may be located in different communication systems.

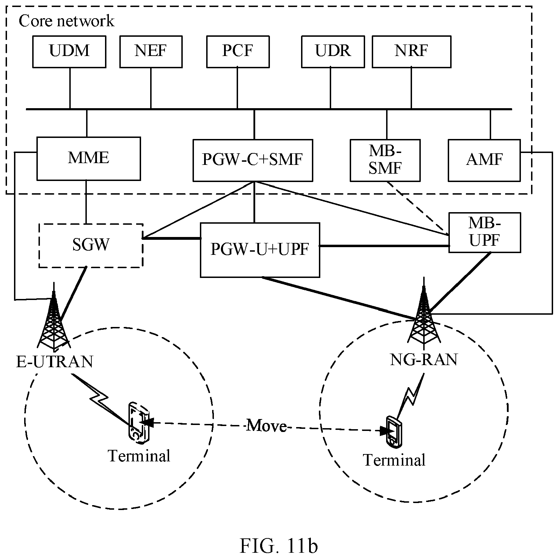

For example, both the source access network device and the target access network device may be located in a 5G communication system shown in FIG. 11a. Alternatively, as shown in a 4G-5G interworking system shown in FIG. 11b, the source access network device is located in a 4G communication system, and the target access network device is located in a 5G communication system. Alternatively, the source access network device is located in a 5G communication system, and the target access network device is located in a 4G communication system.

The following describes each network element or device in FIG. 10.

The source access network device or the target access network device is mainly configured to implement functions such as a physical layer function, resource scheduling and management, and access control and mobility management of the terminal. The source access network device or the target access network device may be a device supporting wired access, or may be a device supporting wireless access. For example, the source access network device may be a next generation radio access network (NG radio access network, NG-RAN) device or an access network (access network, AN)/a radio access network (radio access network, RAN), and includes a plurality of 5G-AN/5G-RAN nodes. The 5G-AN/5G-RAN node may be a next generation NodeB (NR NodeB, gNB), a transmission reception point (transmission reception point, TRP), a transmission point (transmission point, TP) or another access node. The target access network device may be an evolved universal terrestrial radio access network (evolved universal terrestrial radio access network, E-UTRAN) device, for example, may be an access point (access point, AP), a NodeB (NodeB, NB), an enhanced base station (enhanced NodeB, eNB), or another access node.

The terminal may be a device configured to implement a wireless communication function, for example, a terminal or a chip that can be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved communication system. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device, or wearable device connected to a wireless modem, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

It should be noted that FIG. 10 is merely an example of a diagram of an architecture. In addition to the functional units shown in FIG. 10, the system may further include other functional network elements, for example, a mobility management network element, a user plane network element, a policy control network element, and an operation and management (operation and management, O&M) network element. This is not limited in this embodiment of this application. In addition, names of the devices in FIG. 10 are not limited. In addition to the names shown in FIG. 10, the devices may also have other names. For example, the names may be replaced with names of network elements having same or similar functions. This is not limited.

For example, the source access network device and the target access network device are located in a 5G communication system. As shown in FIG. 11a, the terminal corresponds to UE in the 5G communication system shown in FIG. 11a, the source access network device corresponds to an S-gNB in the 5G communication system shown in FIG. 11a, and the target access network device corresponds to a T-gNB in the 5G communication system shown in FIG. 11a. The S-gNB and the T-gNB may access a same AMF, or may access different AMFs. When the S-gNB and the T-gNB may access different AMFs, an AMF accessed by the S-gNB may be referred to as a source AMF (or an S-AMF), and an AMF accessed by the T-gNB may be referred to as a target AMF (or a T-SMF). Further, the system shown in FIG. 11a may further include network elements such as an SMF and a UPF.

For example, the source access network device and the target access network device are located in different communication systems. FIG. 11b shows a 4G-5G interworking system, including a packet data network (packet data network, PDN) gateway user plane function (PDN gateway user plane function, PGW-U)+a UPF, a PDN gateway control plane function (PDN gateway control plane function, PGW-C)+an SMF, a session management function (session management function, SMF), a user plane function (user plane function, UPF), a policy control function (policy control function, PCF), a network exposure function (network exposure function, NEF), an access and mobility management function (access and mobility management function, AMF), an MME, an NRF, a UDR, or a UDM. When the terminal is handed over from a 4G system to a 5G system, a network element or an entity corresponding to the source access network device may be an E-UTRAN, a network element or an entity corresponding to the target access network device may be an NG-RAN, a network element or an entity corresponding to a target mobility management network element may be an AMF, and a network element or an entity corresponding to a source mobility management network element may be an MME. When the terminal is handed over from the 5G system to the 4G system, a network element or an entity corresponding to the source access network device may be an NG-RAN, a network element or an entity corresponding to the target access network device may be an E-UTRAN, a network element or an entity corresponding to the target mobility management network element may be an MME, and a network element or an entity corresponding to the source mobility management network element may be an AMF. It should be noted that "+" in the system shown in FIG. 11b indicates co-deployment.

Optionally, the source access network device, the target access network device, and the terminal in this embodiment of this application may also be referred to as communication apparatuses, and each may be a general-purpose device or a dedicated device. This is not specifically limited in this embodiment of this application.

Optionally, related functions of the source access network device, the target access network device, and the terminal in this embodiment of this application may be implemented by one device, may be jointly implemented by a plurality of devices, or may be implemented by one or more functional modules in one device. This is not specifically limited in this embodiment of this application. It may be understood that the foregoing function may be a network element in a hardware device, may be a software function running on dedicated hardware, a combination of hardware and software, or a virtualization function instantiated on a platform (for example, a cloud platform).

During specific implementation, the devices in the communication system, such as the source access network device, the target access network device, and the terminal, may use the composition structure shown in FIG. 4, or may include the components shown in FIG. 4. Details are not described again.

With reference to the communication system shown in FIG. 10, the following describes the multicast/broadcast service communication method provided in embodiments of this application. Network elements in the following embodiments may include the components shown in FIG. 4. Details are not described again.

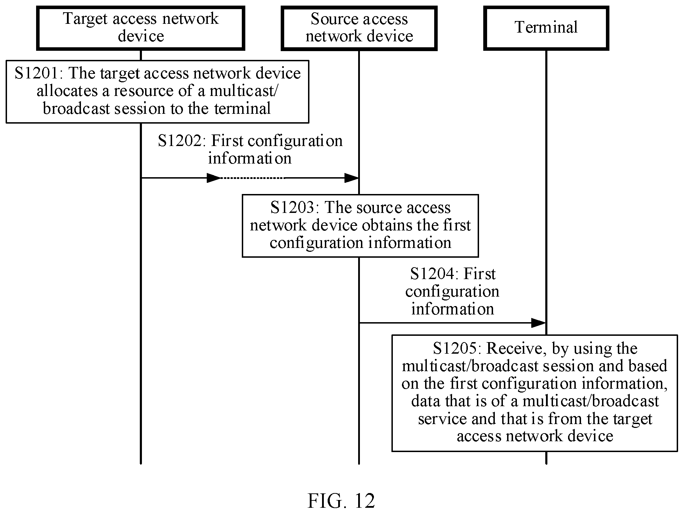

FIG. 12 is a flowchart of a multicast/broadcast service communication method according to an embodiment of this application. As shown in FIG. 12, the method may include the following steps.

S1201: A target access network device allocates a resource of a multicast/broadcast session to a terminal.

A transmission mode of the target access network device may be an SC-PTM mode or an MBSFN mode. When the terminal performs cell handover in a 5G communication system, the target access network device may be the T-gNB in FIG. 11a. Alternatively, when the terminal is handed over from a 4G system to a 5G system, the target access network device may be the NG-RAN in FIG. 11b. When the terminal is handed over from a 5G system to a 4G system, the target access network device may be the E-UTRAN in FIG. 11b. This is not limited.

The multicast/broadcast session may be for transmitting data of a multicast/broadcast service. The resource of the multicast/broadcast session may include a time-frequency resource/radio bearer resource of the multicast/broadcast session, for example, a DRB or an MRB.

For example, that a target access network device allocates a resource of a multicast/broadcast session to a terminal may include: The target access network device receives information about the multicast/broadcast service, and allocates the resource of the multicast/broadcast session to the terminal based on the information about the multicast/broadcast service.

The information about the multicast/broadcast service may include identifier information of the multicast/broadcast service, and/or QoS information of the multicast/broadcast service. For related descriptions of the identifier information of the multicast/broadcast service and the QoS information of the multicast/broadcast service, refer to descriptions in FIG. 12. Details are not described again. The target access network device may receive the information about the multicast/broadcast service from a source access network device, or may receive the information about the multicast/broadcast service from a mobility management network element (for example, a target mobility management network element).

In a possible design, the information about the multicast/broadcast service includes the identifier information of the multicast/broadcast service. That the target access network device allocates the resource of the multicast/broadcast session to the terminal based on the information about the multicast/broadcast service may include: The target access network device checks, based on the identifier information of the multicast/broadcast service, whether there is the resource of the multicast/broadcast session. If there is no resource of the multicast/broadcast session, the target access network device sends the identifier information of the multicast/broadcast service to a PCF via the mobility management network element, obtains the QoS information of the multicast/broadcast service, and allocates the resource of the multicast/broadcast session to the terminal based on the QoS information of the multicast/broadcast service.

The resource of the multicast/broadcast session satisfies a transmission requirement that is of the multicast/broadcast service and that is represented by the QoS information of the multicast/broadcast service. The resource of the multicast/broadcast session may also be referred to as a radio bearer resource corresponding to the multicast/broadcast service. The resource of the multicast/broadcast session may be identified by a DRB ID or an MRB ID. A related configuration of the resource of the multicast/broadcast session may include but is not limited to one or more of a PDCP layer configuration, an RLC layer configuration, a MAC layer configuration, a PHY layer configuration, a logical channel configuration, a transmission channel configuration, a physical channel configuration, and the like.

In another possible design, the information about the multicast/broadcast service includes the QoS information of multicast/broadcast service. That the target access network device allocates the resource of the multicast/broadcast session to the terminal based on the information about the multicast/broadcast service may include: allocating the resource of the multicast/broadcast session to the terminal based on the QoS information of the multicast/broadcast service. A specific process thereof is described above, and details are not described again.

In still another possible design, the information about the multicast/broadcast service includes the identifier information of the multicast/broadcast service and the QoS information of the multicast/broadcast service. That the target access network device allocates the resource of the multicast/broadcast session to the terminal based on the information about the multicast/broadcast service may include: allocating the resource of the multicast/broadcast session to the terminal based on the QoS information of the multicast/broadcast service. A specific process thereof is described above, and details are not described again. Further, a first network element stores a correspondence between the identifier information of the multicast/broadcast service and the resource of the multicast/broadcast session.

S1202: The target access network device sends first configuration information.

The first configuration information may represent the resource of the multicast/broadcast session, and the first configuration information is used by the terminal to synchronize with the multicast/broadcast session after the terminal is handed over to the target access network device. The first configuration information may be configurations (including a PDCP layer configuration, an RLC layer configuration, a MAC layer configuration, a PHY layer configuration, a logical channel configuration, a transmission channel configuration, a physical channel configuration, and the like) of a series of air interface resources corresponding to a radio bearer resource (for example, a DRB or an MRB corresponding to the multicast/broadcast service) that is for transmitting the data of the multicast/broadcast service.

For example, when the transmission mode of the target access network device is the SC-PTM mode, the first configuration information may be SCPTMConfiguration information. The SCPTMConfiguration information may include single-cell multicast traffic channel (single-cell multicast traffic channel, SC-MTCH) information, and the SC-MTCH information may include information (mbms-SessionInfo) about the multicast/broadcast session and a group-radio network temporary identifier (group-radio network temporary identifier, g-RNTI).

For another example, when the transmission mode of the target access network device is the multicast/broadcast single frequency MBSFN mode, the first configuration information may be MBSFNAreaConfiguration information. The MBSFNAreaConfiguration information may include physical multicast channel information (physical multicast channel information, PMCH-Info), and the PMCH information includes a PMCH configuration (pmch-Config) and a multicast/broadcast session list (mbms-SessionInfoList).

Each pmch-Config includes mch-SchedulingPeriod, dataMCS, or the like. The mch-SchedulingPeriod indicates a scheduling periodicity of a physical multicast channel (physical multicast channel, PMCH). For example, when the mch-SchedulingPeriod is set to rf8, it indicates eight radio frames, in other words, eight radio frames (where for example, each frame is 10 ms). The dataMCS indicates a quantity of bits that can be carried by each symbol (symbol) in a modulation and coding scheme for the PMCH. For example, 16 quadrature amplitude modulation (quadrature amplitude modulation, QAM) indicates that each symbol can carry 4 bits. Specifically, one subframe (subframe) in NR includes 14 symbols, and one subframe in LTE includes seven symbols.

The mbms-SessionInfoList includes information (mbms-SessionInfo) about the multicast/broadcast session and a quantity of mbms-SessionInfo carried on a PMCH. Each piece of mbms-SessionInfo includes at least a TMGI, a logical channel identifier (logical channel identifier), and the like.

For example, the target access network device may directly or indirectly send the first configuration information to the source access network device through a handover request response (Handover request ACK) or a handover command.

For example, the target access network device may send the handover request response to the mobility management network element, where the handover request response carries the first configuration information, so that after receiving the first configuration information, the mobility management network element sends the first configuration information to the source access network device. The mobility management network element may be referred to as the target mobility management network element.

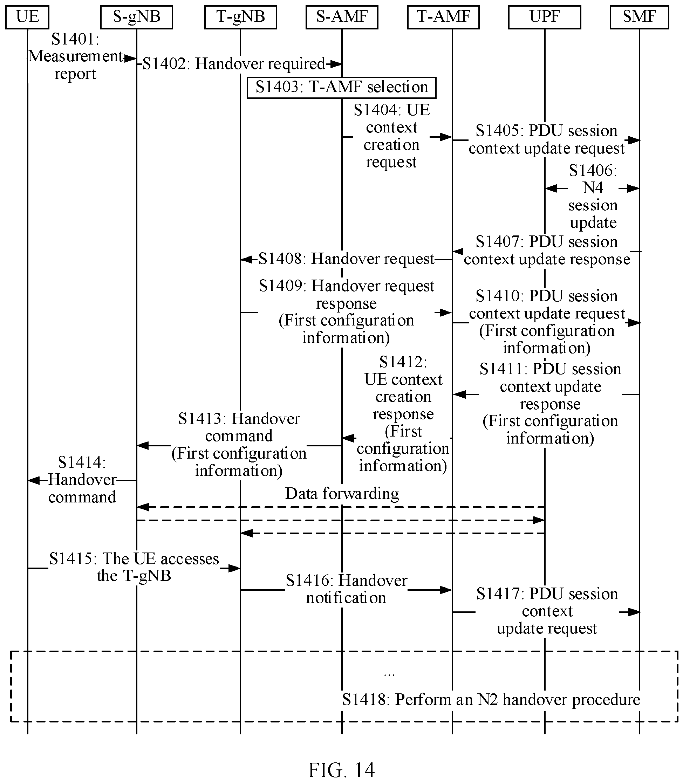

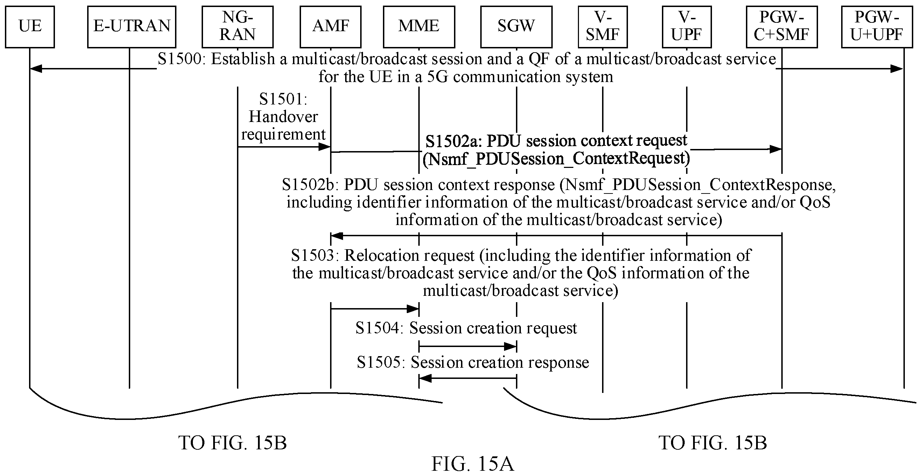

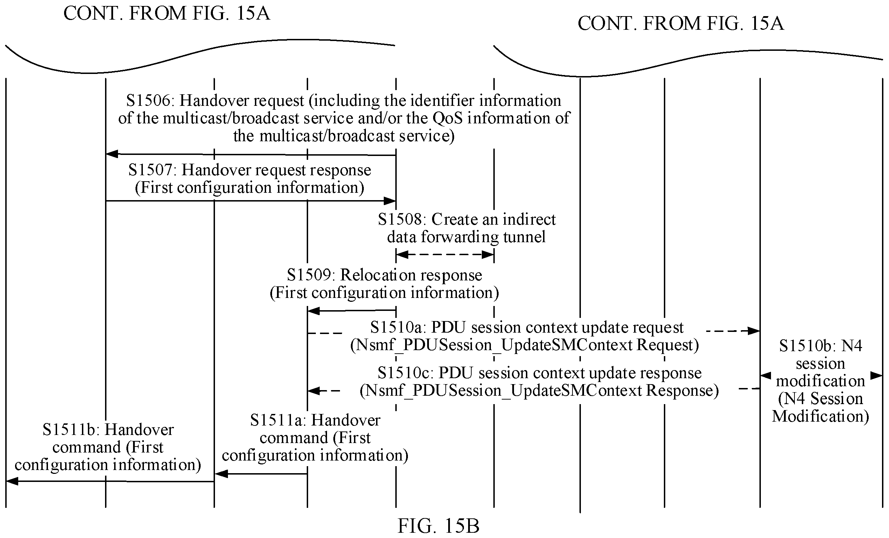

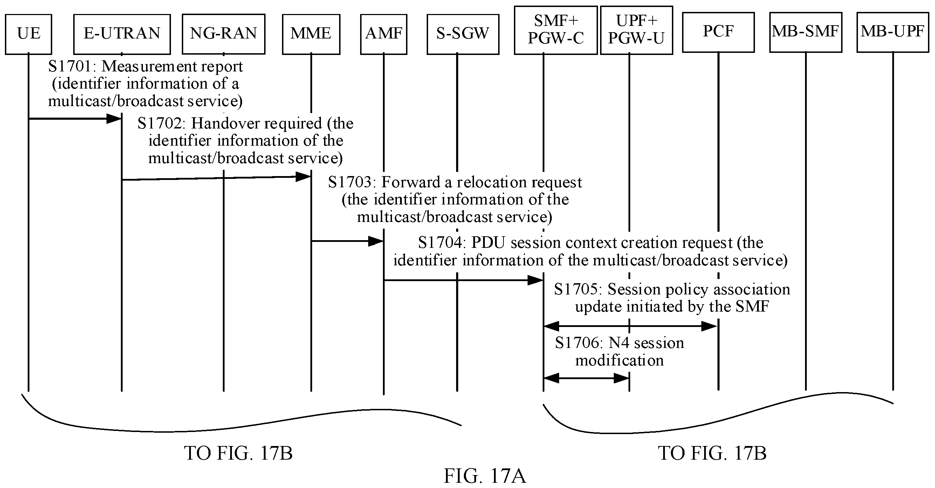

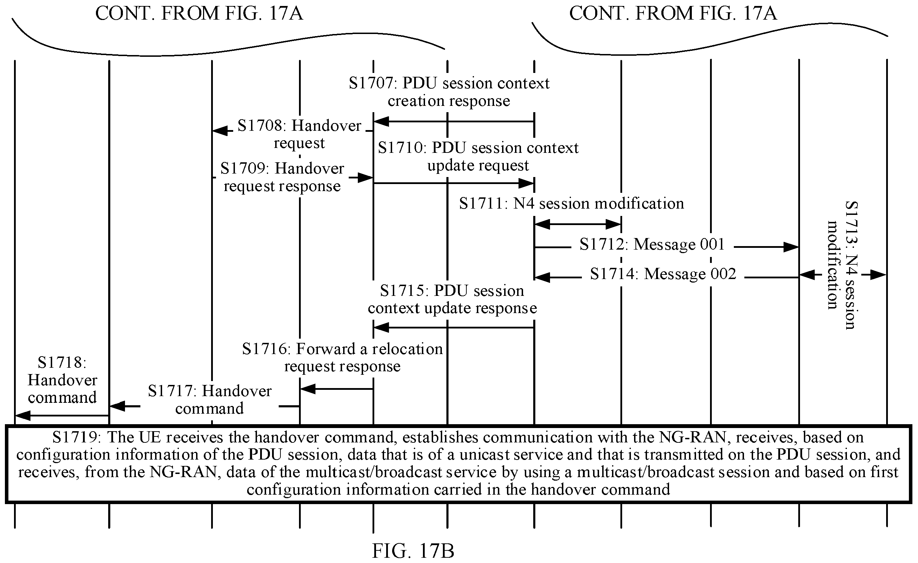

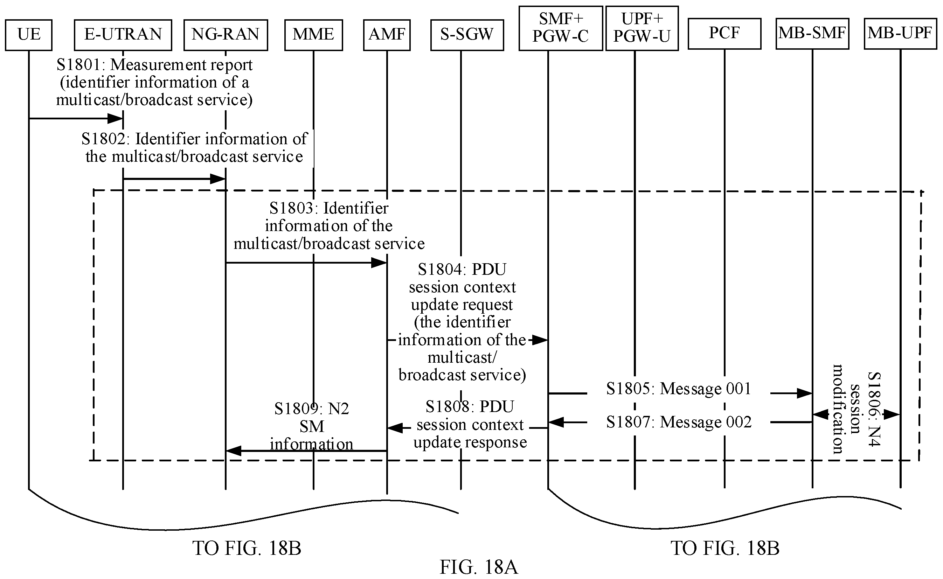

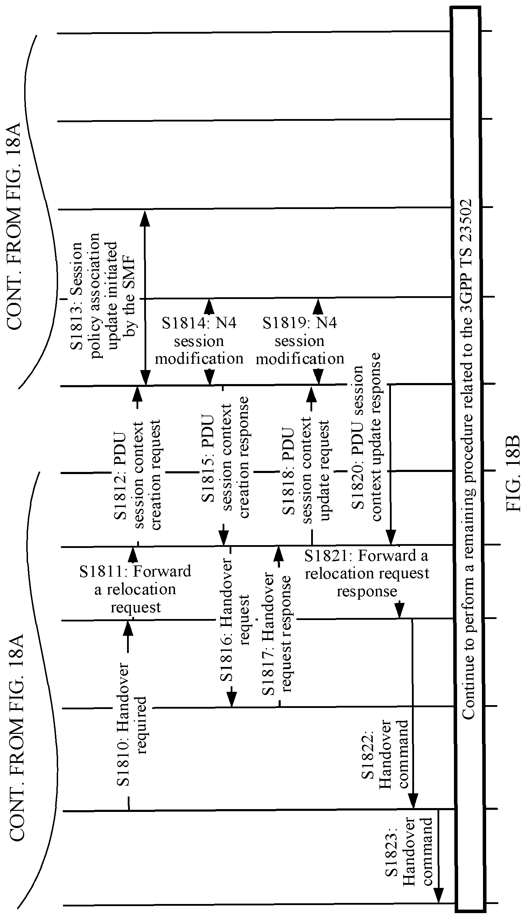

Specifically, when the terminal performs inter-base station cell handover in a 5G communication system, the mobility management network element may be a T-AMF. For this sending manner, refer to descriptions in the following embodiment corresponding to FIG. 14. Alternatively, when the terminal is handed over from a 5G system to a 4G system, the mobility management network element may be an MME. For this sending manner, refer to descriptions in the following embodiment corresponding to FIG. 15A and FIG. 15B. Alternatively, when the terminal is handed over from a 4G system to a 5G system, the mobility management network element may be an AMF. For this sending manner, refer to descriptions in the following embodiment corresponding to FIG. 17A and FIG. 17B or FIG. 18A and FIG. 18B.

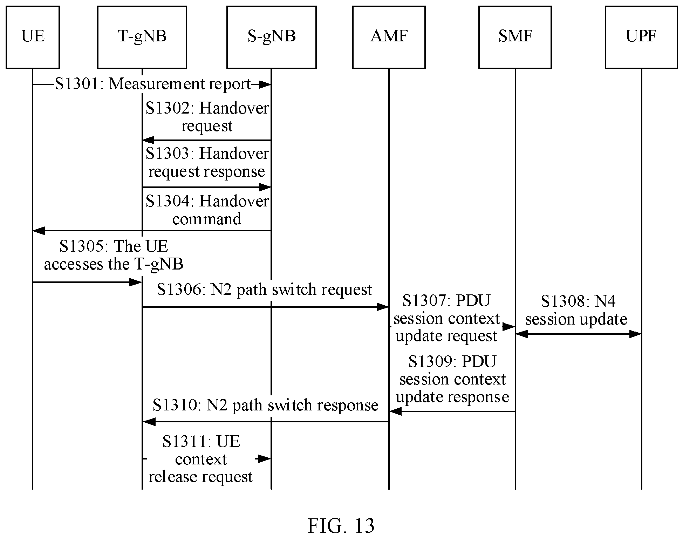

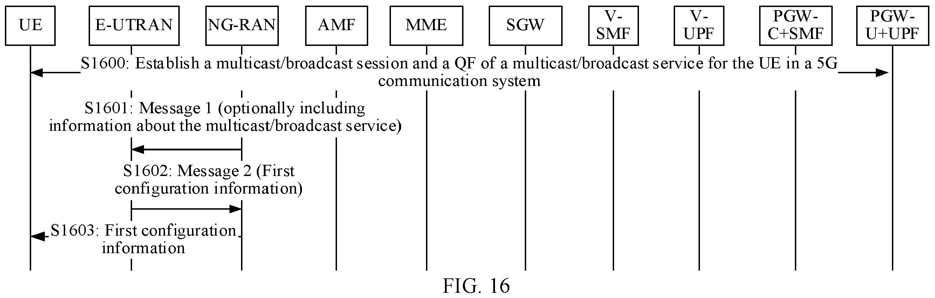

For another example, the target access network device may directly send the handover request response to the source access network device, where the handover request response carries the first configuration information. Specifically, for this manner, refer to descriptions in an embodiment corresponding to FIG. 13 or FIG. 16.

S1203: The source access network device obtains the first configuration information.

The source access network device may receive the first configuration information from the mobility management network element, or may receive the first configuration information from the target access network device.

S1204: The source access network device sends the first configuration information to the terminal.

For example, the first configuration information may be sent to the terminal through a handover command.

S1205: The terminal receives the first configuration information from the source access network device, and receives, by using the multicast/broadcast session and based on the first configuration information, the data that is of the multicast/broadcast service and that is from the target access network device.

Based on the method shown in FIG. 12, the target access network device preconfigures, for the terminal, the resource that is of the multicast/broadcast session and that is for transmitting the data of the multicast/broadcast service, and sends a configuration result to the terminal via the source access network device, so that the terminal transmits, as soon as possible after the terminal is handed over to the target access network device, the data of the multicast/broadcast service by using the preconfigured resource of the multicast/broadcast session, to reduce an interruption delay of the multicast/broadcast service, and improve transmission efficiency of the multicast/broadcast service.

With reference to the 5G communication system shown in FIG. 11a, using an Xn handover between 5G MBS base stations as an example below, and assuming that the terminal is UE, the source access network device is an S-gNB, the target access network device is a T-gNB, and the S-gNB and the T-gNB access a same AMF, the method shown in FIG. 12 is described below.

FIG. 13 shows a multicast/broadcast service communication method according to an embodiment of this application. As shown in FIG. 13, the method may include the following steps.

S1301: UE sends a measurement report to an S-gNB.

The measurement report (measurement report) may include a measurement value of signal quality of one or more cells and a cell identifier of the one or more cells that are obtained by the terminal through measurement. The one or more cells may include a cell on which the UE currently camps and a neighboring cell of the cell on which the UE currently camps. The signal quality may include any one or more of a reference signal received power (reference signal received power, RSRP), reference signal received quality (reference signal received quality, RSRQ), and a signal to interference plus noise ratio (signal to interference plus noise ratio, SINR).

For example, the UE may receive RRC measurement configuration information sent by the S-gNB, measure one or more measurement objects (measurement objects, MOs) based on the RRC measurement configuration information, where the measurement target may include the one or more cells, and send the measurement report to the S-gNB.

S1302: The S-gNB receives the measurement report, determines, based on the measurement report, to hand over the UE to a T-gNB, and sends a handover request (handover request) to the T-gNB.

That the S-gNB determines, based on the measurement report, to hand over the UE to a T-gNB may include: The S-gNB selects, from the measurement value of the signal quality of the one or more cells based on the measurement report, a base station corresponding to a cell with a largest measurement value of signal quality as the T-gNB. Alternatively, if the UE joins a multicast/broadcast group, the S-gNB selects, from the measurement value of the signal quality of the one or more cells, a base station that has greatest signal quality and that supports the multicast/broadcast group as the T-gNB.

The handover request includes PDU session information of the UE. The PDU session information includes a PDU session identifier of the UE and QoS information of a unicast service transmitted in the PDU session. For example, the QoS information of the unicast service may include a QFI of the unicast service and a QoS parameter corresponding to the QFI of the unicast service. The QoS parameter corresponding to the QFI of the unicast service is used by the T-gNB to perform air interface resource configuration, and the QFI of the unicast service is indexed by a 5QI.

In this embodiment of this application, a PDU session of the UE is associated with a multicast/broadcast service. When the PDU session of the UE is associated with the multicast/broadcast service, the PDU session information further includes identifier information of the multicast/broadcast service associated with the PDU session of the UE and/or QoS information of the multicast/broadcast service. The QoS information of the multicast/broadcast service may include a QFI of the multicast/broadcast service and a QoS parameter corresponding to the QFI of the multicast/broadcast service. The QoS parameter corresponding to the QFI of the multicast/broadcast service is used by the T-gNB to perform resource configuration of a multicast/broadcast session.

That a PDU session of the UE is associated with a multicast/broadcast service may include the following two cases. First case: The UE joins, by using control plane signaling of the PDU session, a multicast/broadcast session corresponding to the multicast/broadcast service. For example, the UE joins the multicast/broadcast session when requesting to establish/modify the PDU session. The UE sends a PDU session establishment request or a PDU session modification request to an SMF via the S-gNB and an AMF. An N1 session management container (N1 SM container) of the PDU session establishment request or the PDU session modification request carries the identifier information of the multicast/broadcast service. After receiving the PDU session establishment request or the PDU session modification request, the SMF establishes or modifies the PDU session of the UE, establishes the multicast/broadcast session based on the identifier information of the multicast/broadcast service, and returns a PDU session establishment response or a PDU session modification response to the UE. The PDU session establishment response or the PDU session modification response may carry the identifier information of the multicast/broadcast service and/or the QoS information of the multicast/broadcast service. So far, the PDU session of the UE is associated with the multicast/broadcast service. Second case: Data of the multicast/broadcast service is transmitted to the UE by using the PDU session of the UE. For example, when the S-gNB does not support an MBS, the data of the multicast/broadcast service may be transmitted by using the PDU session of the UE. In this case, the PDU session of the UE is associated with the multicast/broadcast service. However, when the S-gNB supports the MBS, the PDU session of the UE is for transmitting only unicast data, and the data of the multicast/broadcast service is transmitted by using the multicast/broadcast session. In this case, the PDU session of the UE is not associated with the multicast/broadcast service.

S1303: The T-gNB receives the handover request, and obtains the PDU session information from the handover request. The T-gNB prepares/configures/allocates, for/to the UE based on the QoS information that is of the unicast service and that is carried in the PDU session information, a resource of a PDU session that is for transmitting data of the unicast service. The T-gNB prepares/configures/allocates, for/to the UE based on the identifier information of the multicast/broadcast service and/or the QoS information of the multicast/broadcast service that are/is carried in the PDU session information, a resource of the multicast/broadcast session that is for transmitting the data of the multicast/broadcast service, and sends a handover request response (handover request ACK) to the S-gNB.

Specifically, that the T-gNB prepares/configures/allocates, for/to the UE based on the QoS information of the unicast service, a resource of a PDU session that is for transmitting data of the unicast service may include: The T-gNB determines, based on a QoS parameter corresponding to a QFI of the unicast service, a data radio bearer (data radio bearer, DRB) that is for transmitting the data of the unicast service, and a mapping relationship between the QFI of the unicast service and a DRB ID. In addition, the T-gNB may further determine, based on a QoS parameter corresponding to a QFI to which each DRB is mapped, a configuration parameter corresponding to the DRB (for example, whether an acknowledgment mode or a non-acknowledgment mode is used for a radio link control (radio link control, RLC) layer corresponding to the DRB).

For a process in which the T-gNB allocates the resource of the multicast/broadcast session to the UE based on the identifier information of the multicast/broadcast service and/or the QoS information of the multicast/broadcast service, refer to descriptions in step 1201. Details are not described again.

The handover request response may include configuration information of the PDU session that is for transmitting the data of the unicast service, and include the first configuration information.

The configuration information of the PDU session may be used by the UE to receive the data of the unicast service. For example, the configuration information of the PDU session is configurations of a series of air interface resources corresponding to a radio bearer resource (for example, a unicast DRB ID) that is for transmitting the data of the unicast service, for example, a PDCP layer configuration, an RLC layer configuration, a MAC layer configuration, a PHY layer configuration, a logical channel configuration, a transmission channel configuration, and a physical channel configuration.

For related descriptions of the first configuration information, refer to description in S1202. Details are not described again.

It should be noted that, in this application, the first configuration information is not limited to be carried in the handover request response. The T-gNB may alternatively send the first configuration information to the S-gNB by using separate signaling. This is not limited.

S1304: The S-gNB receives a handover request message, and sends a handover command (handover Command) to the UE.

The handover command may indicate the UE to hand over to the T-gNB. The handover command may carry identifier information of the T-gNB, the configuration information of the PDU session, and the first configuration information.

It should be noted that, in this application, the first configuration information is not limited to be carried in the handover command. The first configuration information may alternatively be sent to the terminal through other information. This is not limited.

In this way, the T-gNB sends the configuration information of the PDU session of the T-gNB and the first configuration information to the UE via the S-gNB, so that after accessing the T-gNB in S1305, the UE receives, based on the configuration information of the PDU session, the data that is of the unicast service and that is transmitted in the PDU session, and receives, based on the first configuration information, the data that is of the multicast/broadcast service and that is transmitted on the multicast/broadcast session.

S1305: The UE receives the handover command, accesses the T-gNB based on the identifier information of the T-gNB in the handover command in response to the handover command, receives, based on the configuration information that is of the PDU session and that is carried in the handover command, the data that is of the unicast service and that is transmitted in the PDU session, and receives, by using the multicast/broadcast session and based on the first configuration information carried in the handover command, the data of the multicast/broadcast service from the T-gNB.

S1306: The T-gNB sends an N2 path switch request (N2 path switch request) to the AMF.

The N2 path switch request may include a QFI of a unicast service that is successfully switched in the PDU session and a QFI of a unicast service that fails to be switched in the PDU session. The N2 path switch request may be encapsulated in N2 SM information. Further, the N2 path switch request may further include identifier information of a PDU session tunnel allocated by the T-gNB.

S1307: The AMF sends a PDU session context update request to the SMF.

The PDU session context update request (Nsmf_PDUSession_UpdateSMContext request) may include information included in the N2 SM information in S1306.

S1308: The SMF sends an N4 session update request to a UPF.

The N4 session update request may carry the identifier information of the PDU session tunnel allocated by the T-gNB. Optionally, the N4 session update request may further include identifier information of a PDU session tunnel allocated by the SMF to the UPF. The identifier information of the PDU session tunnel is for establishing a PDU session tunnel between the T-gNB and the UPF.

S1309: The SMF sends a PDU session context update response to the AMF.

Optionally, the PDU session context update response (Nsmf PDUSession UpdateSMContext response) carries the identifier information of the PDU session tunnel allocated by the SMF to the UPF.

Further, an N2 handover procedure shown in S1310 and S1311 is performed.

S1310: The AMF sends an N2 path switch response (N2 path switch requestACK) to the T-gNB.

The N2 path switch response may include the identifier information of the PDU session tunnel allocated by the SMF to the UPF, or the like.

S1311: The T-gNB sends a UE context release (UE context release) request to the S-gNB.

Correspondingly, the S-gNB receives the UE context release request, and releases a resource of a PDU session for the UE, another resource, and the like based on the UE context release request.

Based on the method shown in FIG. 13, in the 5G communication system, information (for example, the identifier information of the multicast/broadcast service and/or the QoS information of the multicast/broadcast service) about the multicast/broadcast service is sent to the T-gNB in advance through interaction on an Xn interface between the S-gNB and the T-gNB, so that the T-gNB preconfigures, for the terminal, the resource of the multicast/broadcast session that is for transmitting the data of the multicast/broadcast service. Therefore, the terminal transmits, as soon as possible after the terminal is handed over to the T-gNB, the data of the multicast/broadcast service by using the resource of the preconfigured multicast/broadcast session, to reduce an interruption delay of the multicast/broadcast service.

In FIG. 13, the multicast/broadcast service communication method provided in this embodiment of this application is described by using the example in which the S-gNB and the T-gNB access the same AMF. Still with reference to the 5G communication system shown in FIG. 11a, a multicast/broadcast service communication method provided in an embodiment of this application is described by using an example in which an S-gNB and a T-gNB access different AMFs, for example, the S-gNB accesses an S-AMF, and the T-gNB accesses a T-AMF.

FIG. 14 shows a multicast/broadcast service communication method according to an embodiment of this application. As shown in FIG. 14, the method may include the following steps.

S1401: UE sends a measurement report to an S-gNB.

An execution process of S1401 is the same as that of S1301, and details are not described again.

S1402: The S-gNB receives the measurement report, determines, based on the measurement report, to hand over the UE to a T-gNB, and sends a handover requirement (handover required) to a source AMF (source AMF, S-AMF).

The handover requirement may include a target identifier (target ID) and information about a PDU session of the UE. The target ID is identifier information of a target cell to which the UE is to be handed over, and the target ID may represent the target cell. For related descriptions of the target ID, refer to descriptions in the 3GPP technical specification (Technical Specification, TS) 38413.

The information about the PDU session of the UE may include an identifier of the PDU session of the UE, QoS information of a unicast service transmitted in the PDU session, and identifier information of a multicast/broadcast service associated with the PDU session of the UE and/or QoS information of the multicast/broadcast service. Specifically, for related descriptions of the information about the PDU session of the UE, refer to descriptions in S1302. Details are not described again.

Further, if there is no direct forwarding tunnel between the S-gNB and the T-gNB, N2 SM information that includes indirect forwarding tunnel information allocated by the S-gNB is further required for the handover. The indirect forwarding tunnel information allocated by the S-gNB is for establishing an indirect forwarding tunnel between the S-gNB and the T-gNB.

For a process in which the S-gNB determines to hand over the UE to the T-gNB, refer to descriptions in S1302. Details are not described again.

S1403: The S-AMF receives the handover requirement, and selects a target AMF (target-AMF, T-AMF) based on the target ID carried in the handover requirement, where the T-AMF is connected to the T-gNB.

S1404: The S-AMF sends a UE context creation request to the T-AMF.

The UE context creation request (Namf_Communication_CreateUEContext request) may include UE context information stored in the S-AMF and the information about the PDU session of the UE that is sent by the S-gNB to the S-AMF in S1402, for example, the identifier of the PDU session of the UE, the QoS information of the unicast service transmitted in the PDU session, and the information about the multicast/broadcast service.

S1405: The T-AMF receives the UE context creation request, and sends a PDU session context update request (Nsmf_PDUSession_UpdateSMContext request) to an SMF based on the UE context creation request.

The PDU session context update request may include the information about the PDU session of the UE (for example, the identifier information of the PDU session of the UE, the QoS information of the unicast service transmitted in the PDU session, and the information (for example, the identifier information of the multicast/broadcast service and/or the QoS information of the multicast/broadcast service) about the multicast/broadcast service), identifier information of the T-AMF, the target ID, and the N2 SM information that carries the indirect forwarding tunnel information allocated by the S-gNB.

S1406: The SMF and a UPF perform N4 session update (N4 session modification).

For example, the SMF sends an N4 session update request to the UPF. Optionally, the N4 session update request carries the indirect forwarding tunnel information allocated by the S-gNB. Then, the UPF returns an N4 session update response to the SMF. Optionally, the N4 session update response includes indirect forwarding tunnel information allocated by the UPF, and the indirect forwarding tunnel allocated by the UPF is for establishing an indirect forwarding tunnel between the S-gNB and the T-gNB.

S1407: The SMF receives the PDU session context update request, and sends a PDU session context update response (Nsmf_PDUSession_UpdateSMContext response) to the T-AMF.

The PDU session context update response may include the information about the PDU session of the UE, for example, the identifier information of the PDU session of the UE, the QoS information of the unicast service transmitted in the PDU session, and the information (for example, the identifier information of the multicast/broadcast service and/or the QoS information of the multicast/broadcast service) about the multicast/broadcast service.

S1408: The T-AMF receives the PDU session context update response, and sends a handover request (handover request) to the T-gNB based on the PDU session context update response.

The handover request may include the information about the PDU session of the UE, for example, the identifier information of the PDU session of the UE, the QoS information of the unicast service transmitted in the PDU session, and the information (for example, the identifier information of the multicast/broadcast service and/or the QoS information of the multicast/broadcast service) about the multicast/broadcast service.

S1409: The T-gNB receives the handover request, and obtains the PDU session information from the handover request. The T-gNB prepares/configures/allocates, for/to the UE based on the QoS information that is of the unicast service and that is carried in the PDU session information, a resource of a PDU session that is for transmitting data of the unicast service. The T-gNB prepares/configures/allocates, for/to the UE based on the identifier information of the multicast/broadcast service and/or the QoS information of the multicast/broadcast service that are/is carried in the PDU session information, a resource of the multicast/broadcast session that is for transmitting the data of the multicast/broadcast service, and sends a handover request response (handover request ACK) to the S-gNB.

Specifically, for an execution process of S1409, refer to the process of S1303 in FIG. 13. Details are not described again.

The handover request response may include configuration information of the PDU session that is for transmitting the data of the unicast service, and include the first configuration information. For related descriptions of the first configuration information, refer to description in S1202. Details are not described again.

S1410: The T-AMF sends a PDU session context update request to the SMF.

The PDU session context update request (Nsmf_PDUSession_UpdateSMContext Request) may include the information included in the handover request response in S1409, for example, include the configuration information of the PDU session that is for transmitting the data of the unicast service, and the first configuration information.

S1411: The SMF sends a PDU session context update response to the T-AMF.

The PDU session context update response may include the configuration information of the PDU session that is for transmitting the data of the unicast service, and the first configuration information.

In addition, optionally, the PDU session context update response further includes the indirect forwarding tunnel information allocated by the UPF.

S1412: The T-AMF sends a UE context creation response to the S-AMF.

The UE context creation response (Nsmf_PDUSession_UpdateSMContext Response) may include the configuration information of the PDU session that is for transmitting the data of the unicast service, and the first configuration information.

S1413: The S-AMF sends a handover command (handover command) to the S-gNB.

The handover command may include the identifier information of the T-gNB, the configuration information of the PDU session, and the first configuration information.

S1414: The S-gNB sends the handover command (handover command) to the UE.

S1415: The UE receives the handover command, accesses the T-gNB based on the identifier information of the T-gNB in the handover command in response to the handover command, receives, based on the configuration information that is of the PDU session and that is carried in the handover command, the data that is of the unicast service and that is transmitted in the PDU session, and receives, by using the multicast/broadcast session and based on the first configuration information carried in the handover command, the data of the multicast/broadcast service from the T-gNB.

S1416: The T-gNB sends a handover notification (handover notify) to the T-AMF.

The handover notification may indicate that the UE is successfully handed over to the T-gNB.

S1417: The T-AMF sends a PDU session context update request to the SMF.

The PDU session context update request (Nsmf PDUSession UpdateSMContext) may carry identifier information of a PDU session tunnel allocated by the T-gNB. Optionally, the PDU session context update request may further carry information about an indirect forwarding tunnel generated by the T-gNB.

S1418: Perform an N2 handover procedure.

For the N2 handover procedure, refer to descriptions in 23.502 in the 3GPP standard. Details are not described.

Based on the method shown in FIG. 14, in the 5G communication system, the information (for example, the identifier information of the multicast/broadcast service and/or the QoS information of the multicast/broadcast service) about the multicast/broadcast service is sent to the T-gNB in advance through interaction on Xn interfaces among the S-gNB, a core network device, and the T-gNB, so that the T-gNB preconfigures, for the terminal, the resource of the multicast/broadcast session that is for transmitting the data of the multicast/broadcast service. Therefore, the terminal transmits, as soon as possible after the terminal is handed over to the T-gNB, the data of the multicast/broadcast service by using the resource of the preconfigured multicast/broadcast session, to reduce an interruption delay of the multicast/broadcast service.

FIG. 13 and FIG. 14 are described by using an example in which the terminal is handed over between cells in the 5G communication system. With reference to a method shown in FIG. 15A and FIG. 15B or FIG. 16 and by using the 5G-4G interworking system shown in FIG. 11b as an example, a multicast/broadcast service communication method when the terminal is handed over from a cell in a 5G network to a cell in a 4G network is described below. With reference to a method shown in FIG. 17A and FIG. 17B or FIG. 18A and FIG. 18B, a multicast/broadcast service communication method when the terminal is handed over from a cell in a 4G network to a cell in a 5G network is described.

FIG. 15A and FIG. 15B shows a multicast/broadcast service communication method according to an embodiment of this application. In the method, a source access network device is an NG-RAN, and a target access network device is an E-UTRAN. As shown in FIG. 15A and FIG. 15B, the method may include the following steps.

S1500 to S1502a are performed according to an existing procedure of interworking from a 5G network to a 4G network.

S1500: Establish a multicast/broadcast session and a QF of a multicast/broadcast service for UE in a 5G communication system.

For an execution process of S1500, refer to a conventional technology. Details are not described. In this case, the UE joins the multicast/broadcast service, and PGW-C+SMF stores information about the multicast/broadcast service.

Related descriptions of the information about the multicast/broadcast service are described in the embodiment corresponding to FIG. 12, and may include identifier information of the multicast/broadcast service and/or QoS information of the multicast/broadcast service.

S1501: When the NG-RAN determines to hand over the UE to the E-UTRAN, the NG-RAN sends a handover requirement to an AMF.

The NG-RAN may receive a measurement report from the UE, and determine, based on the measurement report, to hand over the UE to the E-UTRAN. For a specific execution process, refer to S1301 and S1302. Details are not described again.

S1502a: The AMF receives the handover requirement, and sends a PDU session context request (Nsmf PDUSession contextRequest) to the PGW-C+SMF.

S1502b: The PGW-C+SMF receives the PDU session context request, and sends, to the AMF, a PDU session context response that carries the information about the multicast/broadcast service.

The PDU session context response (Nsmf_PDUSession contextResponse) may include the information about the multicast/broadcast service.

S1503: The NG-RAN receives the PDU session context response, obtains the information about the multicast/broadcast service from the PDU session context response, and sends, to an MME, a relocation request (relocation request) carrying the information about the multicast/broadcast service.

S1504 and S1505: The MME sends a session creation request (create session request) to an SGW, and receives a session creation response (create session response) returned by the SGW.

For an execution process of S1504 and S1505, refer to an existing procedure. Details are not described.

S1506: The MME sends the information about the multicast/broadcast service received in S1503 to the E-UTRAN through a handover request (handover request).

S1507: The E-UTRAN receives the handover request, prepares/configures/allocates, for/to the UE based on the identifier information of the multicast/broadcast service and/or the QoS information of the multicast/broadcast service that are/is carried in the handover request, a resource of the multicast/broadcast session that is for transmitting data of the multicast/broadcast service, and sends a handover request response (handover request ACK) carrying first configuration information to the MME.

For a process in which the E-UTRAN prepares/configures/allocates the resource of the multicast/broadcast session for/to the UE based on the identifier information of the multicast/broadcast service and/or the QoS information of the multicast/broadcast service, refer to descriptions in step 1201. Details are not described again.

For related descriptions of the first configuration information, refer to description in S1202. Details are not described again.

S1508: The MME sends an indirect data forwarding tunnel creation request (create indirect data forwarding tunnel request) to the SGW, and receives an indirect data forwarding tunnel creation response (create indirect data forwarding tunnel response) from the SGW.

For an execution process of S1508, refer to an existing procedure. Details are not described.

S1509: The MME receives the handover request response, and sends a relocation response carrying the first configuration information to the AMF.

S1510a to S1510c are performed. For an execution process of S1510a to S1510c, refer to a conventional technology. Details are not described.

S1511a: TheAMF receives the relocation response (relocation response) carrying the first configuration information, and sends a handover command (handover command) carrying the first configuration information to the NG-RAN.

S1511b: The NG-RAN receives the handover command, and sends the handover command to the UE.

Further, the UE receives the handover command, accesses the E-UTRAN in response to the handover command, and receives, by using the multicast/broadcast session and based on the first configuration information carried in the handover command, the data of the multicast/broadcast service from the E-UTRAN.

Based on the method shown in FIG. 15A and FIG. 15B, in the 5G-4G interworking communication system, the information about the multicast/broadcast service is pre-sent to a 4G base station via interaction between a 5G base station and a 5G core network device, so that the 4G base station pre-configures, for the terminal, the resource of the multicast/broadcast session for transmitting the data of the multicast/broadcast service. Therefore, the terminal transmits, as soon as possible after the terminal is handed over from the 5G base station to the 4G base station, the data of the multicast/broadcast service by using the resource of the preconfigured multicast/broadcast session, to reduce an interruption delay of the multicast/broadcast service, and improve transmission efficiency of the data of the multicast/broadcast service.

FIG. 16 shows a multicast/broadcast service communication method according to an embodiment of this application. In the method, a source access network device is an NG-RAN, and a target access network device is an E-UTRAN. As shown in FIG. 16, the method may include the following steps.

S1600: Establish a multicast/broadcast session and a QF of a multicast/broadcast service for UE in a 5G communication system.

For an execution process of S1600, refer to a conventional technology. Details are not described. In this case, the UE joins the multicast/broadcast service, and PGW-C+SMF stores information about the multicast/broadcast service.

Related descriptions of the information about the multicast/broadcast service are described in the embodiment corresponding to FIG. 12, and may include identifier information of the multicast/broadcast service and/or QoS information of the multicast/broadcast service.

S1601: When the NG-RAN determines to hand over the UE to the E-UTRAN, the NG-RAN sends, to the E-UTRAN, a message 1 that carries the information about the multicast/broadcast service.

The NG-RAN may receive a measurement report from the UE, and determine, based on the measurement report, to hand over the UE to the E-UTRAN. For a specific execution process, refer to S1301 and S1302. Details are not described again.

S1602: The E-UTRAN receives the message 1 that carries the information about the multicast/broadcast service, prepares/configures/allocates, for/to the UE based on the information about the multicast/broadcast service, a resource of the multicast/broadcast session that is for transmitting data of the multicast/broadcast service, and sends, to the NG-RAN, a message 2 that carries first configuration information.

For a process in which the E-UTRAN prepares/configures/allocates the resource of the multicast/broadcast session for/to the UE based on the information about the multicast/broadcast service, refer to descriptions in step 1201. Details are not described again.

For related descriptions of the first configuration information, refer to description in S1202. Details are not described again.

S1603: The NG-RAN receives the message 2 that carries the first configuration information, and sends the first configuration information to the UE.

Further, the NG-RAN may send identifier information of the E-UTRAN to the UE. After receiving the first configuration information, the UE accesses the E-UTRAN based on the identifier information of the E-UTRAN, and then receives, by using the multicast/broadcast session and based on the first configuration information, the data of the multicast/broadcast service from the E-UTRAN.

Based on the method shown in FIG. 16, in the 5G-4G interworking communication system, a 5G base station directly pre-sends the information about the multicast/broadcast service to a 4G base station, so that the 4G base station pre-configures, for the UE, the resource of the multicast/broadcast session for transmitting the data of the multicast/broadcast service. Therefore, the UE transmits, as soon as possible after the terminal is handed over from the 5G base station to the 4G base station, the data of the multicast/broadcast service by using the resource of the preconfigured multicast/broadcast session, to reduce an interruption delay of the multicast/broadcast service, and improve transmission efficiency of the data of the multicast/broadcast service.

With reference to the communication network shown in FIG. 11b, assuming that the terminal is UE, the source access network device is an E-UTRAN, the target access network device is an NG-RAN, the source mobility management network element is an MME, and the target mobility management network element is an AMF, the following describes a service handover process in which the terminal is handed over from a source access network device in a 4G network to a target access network device in a 5G network.

FIG. 17A and FIG. 17B are a flowchart of a multicast/broadcast service communication method according to an embodiment of this application. As shown in FIG. 17A and FIG. 17B, the method may include the following steps.

S1701: UE sends a measurement report (measurement report) to an E-UTRAN.

The UE is UE that joins a multicast/broadcast group corresponding to a multicast/broadcast service.

The measurement report may include identifier information of the multicast/broadcast service. For related descriptions of the measurement report and an execution process of S1701, refer to descriptions in S1301. Details are not described again.

It should be noted that the identifier information that is of the multicast/broadcast service and that is included in the measurement report may alternatively be replaced with other identifier information that represents that the UE joins the multicast/broadcast group, for example, may alternatively be replaced with interest indication information (for example, an MBMS interest indication) of the multicast/broadcast service.

S1702: The E-UTRAN receives the measurement report, determines, based on the measurement report, to hand over the terminal to a target base station: an NG-RAN, and sends a handover requirement (handover required) to an MME.

The handover requirement may be for requesting to hand over the UE to a cell corresponding to the NG-RAN. The handover requirement may include the identifier information of the multicast/broadcast service and other existing information, for example, identifier information of the NG-RAN, availability of a direct forwarding path, and an identifier of a target tracking area. The identifier information of the NG-RAN uniquely identifies the NG-RAN. The availability of the direct forwarding path may indicate whether direct forwarding from a source access network device to a target access network device is available. The identifier of the target tracking area may be used by the MME to select an AMF.

For example, that the E-UTRAN determines, based on the measurement report, to hand over the terminal to a target base station may include: The E-UTRAN selects, from a measurement value of signal quality of one or more cells based on the measurement report, an access network device corresponding to a cell with a largest measurement value of signal quality as the target access network device: the NG-RAN. Alternatively, if the UE joins the multicast/broadcast group, the E-TURAN selects, from the measurement value of the signal quality of the one or more cells, an access network device that has greatest signal quality and that supports the multicast/broadcast group as the target access network device: the NG-RAN.

Further, if the target access network device determined by the E-UTRAN is not an access network device that the UE currently accesses: the E-UTRAN, the E-UTRAN sends information such as the identifier information of the NG-RAN, the availability of the direct forwarding path, and the identifier of the target tracking area to the MME through the handover requirement.

S1703: The MME receives the handover requirement, and sends a forward relocation request to the AMF based on the handover requirement.

The forward relocation request (forward relocation request) may be for requesting the AMF to perform mobility management on the UE. The forward relocation request may carry the identifier information of the multicast/broadcast service.

For related descriptions of the first configuration information, refer to the foregoing descriptions. Details are not described again.

For example, the MME may send the forward relocation request to the AMF based on the identifier that is of the target tracking area and that is carried in the handover requirement. Alternatively, the MME determines the NG-RAN based on the identifier information that is of the NG-RAN and that is carried in the handover requirement, and sends the forward relocation request to the AMF that manages the NG-RAN.

S1704: The AMF receives the forward relocation request, and sends a PDU session context creation request to PGW-C+SMF.

The PDU session context creation request (Nsmf PDU session create SMContext request) may notify the PGW-C+SMF to prepare to establish, for the UE, a resource of a PDU session, a forwarding tunnel, and the like. In addition to an existing information element specified in the 3GPP technical specification 23502, the PDU session context creation request further includes the identifier information that is of the multicast/broadcast service and that represents that the UE joins the multicast/broadcast group

S1705: If a PCF configures a dynamic PCC rule, after the PGW-C+SMF receives the PDU session context creation request, the PGW-C+SMF sends a session policy association update (SMF initiated SM policy modification) to the PCF, and the PCF receives the session policy association update and sends the PCC rule to the PGW-C+SMF.

The PCC rule may include a service data flow (service data flow, SDF) identification rule of a unicast service and packet filtering (packet filter) information of the unicast service. When the PDU session context creation request carries the identifier information of the multicast/broadcast service, the PCC rule sent by the PCF to the PGW-C+SMF further includes an SDF identification rule of the multicast/broadcast service and packet filtering information of the multicast/broadcast service.

Further, the PCC rule may include another configuration parameter that is for transmitting data to be sent to the UE, for example, a PDR, a forwarding action rule (forwarding action rule, FAR) associated with the PDR, a QoS requirement, or a QF mapping rule. For related descriptions of the configuration parameters, refer to a conventional technology.

It should be understood that S1705 is a session management policy update process initiated by the SMF. If no dynamic PCC rule is configured by the PCF, and the PCC rule is statically configured, S1705 is skipped.

S1706: The PGW-C+SMF sends an N4 session modification (N4 session modification) request to PGW-U+UPF. Correspondingly, the PGW-U+UPF receives the N4 session modification request, and sends an N4 session modification response to the PGW-C+SMF. N4 session modification is completed so far.

The N4 session modification request may be for establishing a PDU session. The N4 session modification request may carry information such as a PDR, an FAR, and a QER. Further, if the PGW-C+SMF allocates tunnel information (which may be referred to as tunnel information of the PGW-U+UPF for short) of the PDU session to the PGW-U+UPF, the N4 session establishment request may further carry the tunnel information of the PGW-U+UPF. The tunnel information of the PGW-U+UPF may include an IP address and/or a port number of the PGW-U+UPF.

S1707: After the N4 session modification is completed, the PGW-C+SMF sends a PDU session context creation response to the AMF.

The PDU session context creation response (Nsmf_PDUSession CreateSMContext Response) may include the identifier information of the PDU session and N2 SM information corresponding to the unicast service, the identifier information of the multicast/broadcast service, N2 SM information corresponding to the multicast/broadcast service, and the like.

The N2 SM information of the unicast service may include a QFI of the unicast service, a QoS parameter (for example, a parameter such as a 5QI, an ARP, quality of service notification control (QoS notification control, QNC), an MBR, or a GBR that corresponds to the QFI) corresponding to the QFI of the unicast service, and a mapping relationship between an EPS bearer identifier (EPS bearer identifier, EBI) and the QFI. The N2 SM information corresponding to the multicast/broadcast service may include a QFI of the multicast/broadcast service and a QoS parameter (for example, a parameter such as a 5QI, an ARP, quality of service notification control (QoS notification control, QNC), an MBR, or a GBR that corresponds to the QFI) corresponding to the QFI of the multicast/broadcast service.

S1708: The AMF receives the PDU session context creation request, and sends a handover request to the NG-RAN.

The handover request (handover request) may be for requesting to hand over the UE to the NG-RAN. The handover request may include the N2 SM information corresponding to the unicast service in S1707. If the UE joins the multicast/broadcast group, the handover request further includes the N2 SM information corresponding to the multicast/broadcast service.

S1709: The NG-RAN receives the handover request carrying the N2 SM information, and allocates, to the UE based on the N2 SM information corresponding to the unicast service, a resource of a PDU session that is for transmitting data of the unicast service and that is between the NG-RAN and the UE.

If the handover request carries the N2 SM information corresponding to the multicast/broadcast service, and the multicast/broadcast service has not been started, for example, there is no air interface resource and/or context information configured for the multicast/broadcast service in the NG-RAN, the NG-RAN allocates, to the UE based on the N2 SM information corresponding to the multicast/broadcast service, a resource of a multicast/broadcast session that is for transmitting data of the multicast/broadcast service. The NG-RAN sends a handover request response (handover request ACK) to the AMF.

The handover request response may carry configuration information of the PDU session and the first configuration information. For related descriptions of the configuration information of the PDU session and the first configuration information, refer to descriptions in S1303. Details are not described again.

Further, the handover request response may further carry tunnel information that corresponds to the PDU session and that is allocated by the NG-RAN.

S1710: The AMF receives the handover request response, and sends a PDU session context update request to the PGW-C+SMF.

The PDU session context update request (Nsmf PDUSession UpdateSMContext Request) may carry the tunnel information that is of the PDU session and that is allocated by the NG-RAN and the configuration information of the PDU session, and further carry tunnel information that is of the multicast/broadcast session and that is allocated by the NG-RAN and the first configuration information in S1709.

S1711: The PGW-C+SMF receives the PDU session context update request, and performs N4 session modification with the PGW-U+UPF based in the PDU session context update request.

For example, the PGW-C+SMF sends an N4 session modification request to the PGW-U+SMF, where the N4 session modification request may carry the tunnel information that is of the PDU session and that is allocated by the NG-RAN and the tunnel information that is of the multicast/broadcast session and that is allocated by the NG-RAN. The PGW-U+UPF receives the N4 session modification request, stores a correspondence between the tunnel information of the PDU session and the QFI of the unicast service, establishes a transmission tunnel of the PDU session between the NG-RAN and the PGW-U+UPF, stores a correspondence between the tunnel information of the multicast/broadcast session and the QFI of the multicast/broadcast service, and establishes a transmission tunnel of the multicast/broadcast session between the NG-RAN and the PGW-U+UPF.

Further, if a transmission tunnel that is between an MB-UPF and the PGW-U+UPF and that is for transmitting the data of the multicast/broadcast service has not been established, S1712 to S1714 and S1715 to S1719 are performed. On the contrary, if the transmission tunnel that is between the MB-UPF and the PGW-U+UPF and that is for transmitting the data of the multicast/broadcast service has been established, S1712 to S1714 are skipped, and S1715 to S1719 are performed without S1712 to S1714.

S1712: The PGW-C+SMF sends a message 001 to an MB-SMF.

The message 001 is for notifying the MB-SMF that the UE expects or is to be handed over to the NG-RAN.

Optionally, if the transmission tunnel that is between the MB-UPF and the PGW-U+UPF and that is for transmitting the data of the multicast/broadcast service has not been established, the PGW-C+SMF may alternatively notify the MB-SMF to establish the transmission tunnel that is between the MB-UPF and the PGW-U+UPF and that is for transmitting the data of the multicast/broadcast service. In this case, the message 001 may carry downlink tunnel information that is of the PGW-U+UPF and that is allocated by the PGW-C+SMF to the PGW-U+UPF.

S1713: The MB-SMF receives the message 001, and sends N4 session modification (N4 session modification) to the MB-UPF based on the message 001.

Specifically, the process may include: The MB-SMF sends, to the MB-UPF, the received downlink tunnel information that is of the PGW-U+UPF and that is allocated by the PGW-C+SMF and tunnel information allocated by the MB-SMF to the MB-UPF. The MB-UPF stores a correspondence between the tunnel information of the PGW-U+UPF and the tunnel information allocated by the MB-SMF to the MB-UPF, and establishes the transmission tunnel that is between the MB-UPF and the PGW-U+UPF and that is for transmitting the data of the multicast/broadcast service.

S1714: The MB-SMF sends a message 002 to the PGW-U+SMF in response to the message 001.

Correspondingly, the PGW-U+SMF receives the message 002.

So far, a transmission tunnel between the MB-UPF and the PGW-U+UPF and a transmission tunnel between the PGW-U+UPF and the NG-RAN that are for transmitting the data of the multicast/broadcast service are established.

S1715: In response to S1710, the PGW-C+SMF sends a PDU session context update response to the AMF.

The PDU session context update response (Nsmf_PDUSession UpdateSMContext Response) may carry the configuration information of the PDU session and the first configuration information.

S1716: The AMF receives the PDU session context update response, and sends a forward relocation response to the MME.

In addition to an existing information element specified in the 3GPP technical specification 23502, the forward relocation response (forward relocation response) further includes the configuration information of the PDU session and the first configuration information.

S1717: The MME receives the forward relocation response, and sends a handover command (handover command) to the E-UTRAN.

The handover command may include the configuration information of the PDU session and the first configuration information.

S1718: The E-UTRAN receives the handover command, and sends the handover command to the UE.

S1719: The UE receives the handover command, hands over to the NG-RAN based on the handover command, establishes communication with the NG-RAN, receives, based on the configuration information of the PDU session, the data that is of the unicast service and that is transmitted on the PDU session, and receives, by using the multicast/broadcast session and based on the first configuration information carried in the handover command, the data of the multicast/broadcast service from the NG-RAN.

Based on the method shown in FIG. 17A and FIG. 17B, before the UE joining the multicast/broadcast service is handed over to the 5G communication system, the resource of the multicast/broadcast session corresponding to the multicast/broadcast service may be configured for the UE in advance, and the first configuration information corresponding to the resource of the multicast/broadcast session is sent to the UE before the UE is handed over, so that the UE immediately receives the data of the multicast/broadcast service based on the first configuration information after the handover, to reduce an interruption delay of the multicast/broadcast service, and improve transmission efficiency of the multicast/broadcast service when the UE moves from the E-UTRAN/EPC to the NR/5GC across systems.

With reference to the communication network shown in FIG. 11b, assuming that the terminal is UE, the source access network device is an E-UTRAN, the target access network device is an NG-RAN, the source mobility management network element is an MME, and the target mobility management network element is an AMF, the following describes a service handover process in which the terminal is handed over from a source access network device in a 4G network to a target access network device in a 5G network in the method shown in FIG. 12.

Different from the embodiment shown in FIG. 17A and FIG. 17B, in the embodiment shown in FIG. 18A and FIG. 18B, before the handover process is performed, the PGW-C+SMF is triggered to establish the transmission channel between the MB-UPF and the PGW-U+UPF, and the PGW-C+SMF is triggered to configure the N2 SM information for the unicast service, configure the N2 SM information for the multicast/broadcast service, and send, to the NG-RAN, the N2 SM information corresponding to the unicast service and the N2 SM information corresponding to the multicast/broadcast service. Subsequently, in the handover process, the NG-RAN configures the resource of the PDU session based on the N2 SM information corresponding to the unicast service, configures the resource of the multicast/broadcast session based on the N2 SM information corresponding to the multicast/broadcast service, and sends the configuration information of the PDU session and the first configuration information to the UE via the MME and the E-UTRAN, so that the UE receives the data of the unicast service based on the configuration information of the PDU session, and receives the data of the multicast/broadcast service based on the first configuration information. Specifically, for this process, refer to the embodiment corresponding to the method shown in FIG. 18A and FIG. 18B.

FIG. 18A and FIG. 18B are a flowchart of a multicast/broadcast service communication method according to an embodiment of this application. The method includes the following steps.

S1801: UE sends a measurement report (measurement report) to an E-UTRAN.

For related descriptions of the measurement report and an execution process of S1801, refer to descriptions in S1301. Details are not described again.

The UE is UE that joins a multicast/broadcast group corresponding to a multicast/broadcast service.

The measurement report may include identifier information of the multicast/broadcast service. For related descriptions of the measurement report and an execution process of S1701, refer to descriptions in S1301. Details are not described again.

It should be noted that the identifier information that is of the multicast/broadcast service and that is included in the measurement report may alternatively be replaced with other identifier information that represents that the UE joins the multicast/broadcast group, for example, may alternatively be replaced with interest indication information (for example, an MBMS interest indication) of the multicast/broadcast service.

S1802: The E-UTRAN receives the measurement report, determines, based on the measurement report, to hand over the terminal to an NG-RAN, and sends the identifier information of the multicast/broadcast service to the NG-RAN.

For a process in which the E-UTRAN determines, based on the measurement report, to hand over the terminal to the NG-RAN, refer to descriptions in S1702 in FIG. 17A and FIG. 17B. Details are not described again.

S1803: The NG-RAN receives the identifier information of the multicast/broadcast service, and sends the identifier information of the multicast/broadcast service to an AMF.

S1804: The AMF receives the identifier information of the multicast/broadcast service, and sends, to PGW-C+SMF, a PDU session context update request carrying the identifier information of the multicast/broadcast service.

S1805: The PGW-C+SMF receives the PDU session context update request carrying the identifier information of the multicast/broadcast service, and sends a message 001 to an MB-SMF based on the PDU session context update request.

The message 001 is for notifying the MB-SMF that the UE expects or is to be handed over to the NG-RAN. The message 001 may carry the identifier information of the multicast/broadcast service.

Optionally, if the transmission tunnel that is between the MB-UPF and PGW-U+UPF and that is for transmitting the data of the multicast/broadcast service has not been established, the PGW-C+SMF may alternatively notify the MB-SMF to establish the transmission tunnel that is between the MB-UPF and the PGW-U+UPF and that is for transmitting the data of the multicast/broadcast service. In this case, the message 001 may further carry downlink tunnel information that is of the PGW-U+UPF and that is allocated by the PGW-C+SMF to the PGW-U+UPF.

S1806: The MB-SMF receives the message 001, and sends N4 session modification (N4 session modification) to the MB-UPF.

A specific process of S1806 may be: The MB-SMF sends, to the MB-UPF, the received downlink tunnel information that is of the PGW-U+UPF and that is allocated by the PGW-C+SMF and tunnel information allocated by the MB-SMF to the MB-UPF. The MB-UPF stores a correspondence between the tunnel information of the PGW-U+UPF and the tunnel information allocated by the MB-SMF to the MB-UPF, and establishes the transmission tunnel that is between the MB-UPF and the PGW-U+UPF and that is for transmitting the data of the multicast/broadcast service.

S1807: The MB-SMF sends a message 002 to the PGW-U+SMF in response to the message 001.

The message 002 may carry the identifier information of a multicast/broadcast session, N2 SM information corresponding to the multicast/broadcast service, and the like. For example, the MB-SMF may obtain, from an MB-PCF based on the identifier information of the multicast/broadcast service carried in the message 001, the N2 SM information corresponding to the multicast/broadcast service, and send the obtained N2 SM information corresponding to the multicast/broadcast service to the PGW-U+SMF through the message 002.

So far, a transmission tunnel that is from the MB-UPF to the PGW-U+UPF and that is for transmitting the data of the multicast/broadcast service is established.

S1808: The PGW-U+SMF receives the message 002, and sends a PDU session context update response to theAMF.

The PDU session context update response may include the identifier information of the PDU session and N2 SM information corresponding to the unicast service, the identifier information of the multicast/broadcast session, the N2 SM information corresponding to the multicast/broadcast service, and the like.

For related descriptions of the N2 SM information corresponding to the unicast service and the N2 SM information corresponding to the multicast/broadcast service, refer to descriptions in S1707. Details are not described again.

Further, the PDU session context update response may include tunnel information of the PGW-U+UPF.

S1 809: The AMF receives the PDU session context update response, and sends N2 SM information to the NG-RAN. Correspondingly, the NG-RAN receives the N2 SM information.

S1810: The E-UTRAN sends a handover requirement to an MME based on the measurement report.

S1811: The MME receives the handover requirement, and sends a forward relocation request to the AMF based on the handover requirement.

S1812: The AMF receives the forward relocation request, and sends a PDU session context creation request to PGW-C+SMF.

S1813: If a PCF configures a dynamic PCC rule, after the PGW-C+SMF receives the PDU session context creation request, the PGW-C+SMF sends a session policy association update (SMF initiated SM policy modification) to the PCF, and the PCF receives the session policy association update, sends the PCC rule to the PGW-C+SMF, and performs a session policy update process.

S1814: The PGW-C+SMF sends N4 session modification to the PGW-U+UPF.

S1815: After the N4 session modification is completed, the PGW-C+SMF sends a PDU session context creation response to the AMF.

S1816: The AMF receives the PDU session context creation request, and sends a handover request to the NG-RAN.

S1817: The NG-RAN receives the handover request, allocates, to the UE based on the N2 SM information corresponding to the unicast service received in S1809, a resource of the PDU session that is for transmitting the data of the unicast service and that is between the NG-RAN and the UE, and allocates, to the UE based on the N2 SM information corresponding to the multicast/broadcast service received in S1809, a resource of the PDU session that is for transmitting the data of the multicast/broadcast service and that is between the NG-RAN and the UE. The NG-RAN sends a handover request response (handover request ACK) to the AMF. The handover request response carries the configuration information of the PDU session and the first configuration information.

S1818: The AMF receives the handover request response, and sends a PDU session context update request carrying the configuration information of the PDU session and the first configuration information to the PGW-C+SMF.

S1819: The PGW-C+SMF receives the PDU session context update request, and sends an N4 session modification (N4 session modification) request to the PGW-U+UPF. Correspondingly, the PGW-U+UPF receives the N4 session modification request, and sends an N4 session modification response to the PGW-C+SMF. N4 session modification is completed so far.

The N4 session modification request may be for establishing a PDU session. The N4 session modification request may carry information such as a PDR, an FAR, and a QER. Further, if the PGW-C+SMF allocates tunnel information (which may be referred to as tunnel information of the PGW-U+UPF for short) of the PDU session to the PGW-U+UPF, the N4 session establishment request may further carry the tunnel information of the PGW-U+UPF. The tunnel information of the PGW-U+UPF may include an IP address and/or a port number of the PGW-U+UPF.

S1820: The PGW-C+SMF sends, to the AMF, a PDU session context update response carrying the configuration information of the PDU session and the first configuration information.

S1821: The AMF receives the PDU session context update response from the PGW-C+SMF, and sends, to the MME, a forward relocation response carrying the configuration information of the PDU session and the first configuration information.

S1822: The MME receives the forward relocation response, and sends, to the E-UTRAN, a handover command carrying the configuration information of the PDU session and the first configuration information.

S1823: The E-UTRAN receives the handover command, and sends, to the UE, the handover command carrying the configuration information of the PDU session and the first configuration information.

Further, the UE receives the handover command, hands over to the NG-RAN based on the handover command, establishes communication with the NG-RAN, receives, based on the configuration information of the PDU session, the data that is of the unicast service and that is transmitted on the PDU session, and receives, by using the multicast/broadcast session and based on the first configuration information carried in the handover command, the data of the multicast/broadcast service from the NG-RAN.

Based on the method shown in FIG. 18A and FIG. 18B, before the UE joining the multicast/broadcast service is handed over to the 5G communication system, the resource of the multicast/broadcast session corresponding to the multicast/broadcast service may be configured for the UE in advance, and the first configuration information corresponding to the resource of the multicast/broadcast session is sent to the UE before the UE is handed over, to reduce an interruption delay of the multicast/broadcast service, and improve transmission efficiency of the multicast/broadcast service when the UE moves from the E-UTRAN/EPC to the NR/5GC across systems.

The foregoing mainly describes the solutions provided in embodiments of this application from a perspective of interaction between nodes. It may be understood that, to implement the foregoing functions, each node, for example, the first session management function network element or the application server, includes a corresponding hardware structure and/or software module for implementing each function. A person skilled in the art should be easily aware that algorithm steps in examples described with reference to embodiments disclosed in this specification can be implemented in a form of hardware, software, or a combination of hardware and computer software in the methods in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first session management function network element or the application server may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

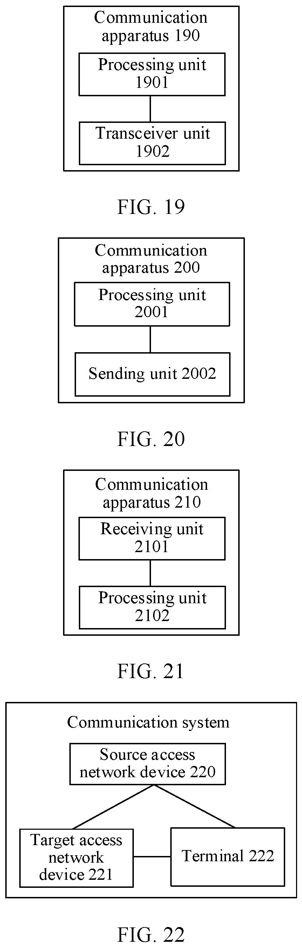

FIG. 19 is a diagram of a structure of a communication apparatus 190. The communication apparatus 190 may be a source access network device, a chip or a system-on-a-chip in the source access network device, another apparatus that can implement a function of the source access network device in the foregoing methods, or the like. The communication apparatus 190 may be configured to perform a function of the source access network device in the foregoing method embodiments. In a possible implementation, the communication apparatus 190 shown in FIG. 19 includes a processing unit 1901 and a transceiver unit 1902.

The processing unit 1901 is configured to control the transceiver unit 1902 to obtain first configuration information. The first configuration information is used by a terminal to receive, after the terminal is handed over to a target access network device, data that is of a multicast/broadcast service and that is transmitted on a multicast/broadcast session.

The processing unit 1901 is further configured to control the transceiver unit 1902 to send the first configuration information to the terminal.

Specifically, all related content of the steps in the foregoing method embodiments shown in FIG. 12 to FIG. 18A and FIG. 18B may be cited in function descriptions of the corresponding functional modules. Details are not described herein again. The communication apparatus 190 is configured to perform a function of the source access network device in the multicast/broadcast service communication method shown in the methods shown in FIG. 12 to FIG. 18A and FIG. 18B, to achieve effect the same as that of the multicast/broadcast service communication method.

In another implementation, the communication apparatus 190 shown in FIG. 19 includes a processing module and a communication module. The processing module is configured to control and manage an action of the communication apparatus 190. For example, the processing module may integrate a function of the processing unit 1901, and may be configured to support the communication apparatus 190 in performing a step such as S1203. The communication module may integrate a function of the transceiver unit 1902, and communicate with another network entity, for example, communicate with a functional module or a network entity shown in any communication system in FIG. 10 to FIG. 11b. Further, the communication apparatus 190 may further include a storage module, configured to store instructions and/or data. When the instructions are executed by the processing module, the processing module is enabled to implement the method on a side of the source access network device.

The processing module may be a processor, a controller, a module, or a circuit. The processing module may implement or execute various example logical blocks described with reference to content disclosed in embodiments of this application. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 190 in this embodiment of this application may be the communication apparatus shown in FIG. 4.

FIG. 20 is a diagram of a structure of a communication apparatus 200. The communication apparatus 200 may be a target access network device, a chip or a system-on-a-chip in the target access network device, another apparatus that can implement a function of the target access network device in the foregoing methods, or the like. The communication apparatus 200 may be configured to perform a function of the target access network device in the foregoing method embodiments. In a possible implementation, the communication apparatus 200 shown in FIG. 20 includes a processing unit 2001 and a sending unit 2002.

The processing unit 2001 is configured to allocate a resource of a multicast/broadcast session to a terminal. The multicast/broadcast session is for transmitting data of a multicast/broadcast service.

The sending unit 2002 is configured to send first configuration information. The first configuration information represents the resource of the multicast/broadcast session, and the first configuration information is used by the terminal to receive, after the terminal is handed over to the target access network device, the data that is of the multicast/broadcast service and that is transmitted on the multicast/broadcast session.

Specifically, all related content of the steps in the foregoing method embodiments shown in FIG. 12 to FIG. 18A and FIG. 18B may be cited in function descriptions of the corresponding functional modules. Details are not described herein again. The communication apparatus 200 is configured to perform a function of the target access network device in the multicast/broadcast service communication method shown in the methods shown in FIG. 12 and FIG. 18A and FIG. 18B. Therefore, effect the same as that of the multicast/broadcast service communication method can be achieved.

In another implementation, the communication apparatus 200 shown in FIG. 20 includes a processing module and a communication module. The processing module is configured to control and manage an action of the communication apparatus 200. For example, the processing module may integrate a function of the processing unit 2001, and may be configured to support the communication apparatus 200 in performing a step such as S1201. The communication module may integrate a function of the sending unit 2002, and communicate with another network entity, for example, communicate with a functional module or a network entity shown in any communication system in FIG. 2 and FIG. 3. Further, the communication apparatus 200 may further include a storage module, configured to store instructions and/or data. When the instructions are executed by the processing module, the processing module is enabled to implement the method on a side of the target access network device.

The processing module may be a processor, a controller, a module, or a circuit. The processing module may implement or execute various example logical blocks described with reference to content disclosed in embodiments of this application. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 200 in this embodiment of this application may be the communication apparatus shown in FIG. 4.

FIG. 21 is a diagram of a structure of a communication apparatus 210. The communication apparatus 210 may be a terminal, a chip or a system-on-a-chip in the terminal, another apparatus that can implement a function of the terminal in the foregoing methods, or the like. The communication apparatus 210 may be configured to perform a function of the terminal in the foregoing method embodiments. In a possible implementation, the communication apparatus 210 shown in FIG. 21 includes a receiving unit 2101 and a processing unit 2102.

The receiving unit 2101 is configured to receive first configuration information from a source access network device. The first configuration information represents a resource of a multicast/broadcast session, and the first configuration information is used by the terminal to receive, after the terminal is handed over to a target access network device, data that is of a multicast/broadcast service and that is transmitted on the multicast/broadcast session.

The processing unit 2102 is configured to receive, by using the multicast/broadcast session and based on the first configuration information, the data that is of the multicast/broadcast service and that is from the target access network device.

Specifically, all related content of the steps in the foregoing method embodiments shown in FIG. 12 to FIG. 18A and FIG. 18B may be cited in function descriptions of the corresponding functional modules. Details are not described herein again. The communication apparatus 210 is configured to perform a function of the terminal in the multicast/broadcast service communication method shown in the methods shown in FIG. 12 and FIG. 18A and FIG. 18B. Therefore, effect the same as that of the foregoing multicast/broadcast service communication method can be achieved.

In another implementation, the communication apparatus 210 shown in FIG. 21 includes a processing module and a communication module. The processing module is configured to control and manage an action of the communication apparatus 210. For example, the processing module may integrate a function of the processing unit 2102, and may be configured to support the communication apparatus 210 in performing a step such as S1205. The communication module may integrate a function of the sending unit 2101, and communicate with another network entity, for example, communicate with a functional module or a network entity shown in any communication system in FIG. 2 and FIG. 3. Further, the communication apparatus 210 may further include a storage module, configured to store instructions and/or data. When the instructions are executed by the processing module, the processing module is enabled to implement the method on a side of the terminal.

The processing module may be a processor, a controller, a module, or a circuit. The processing module may implement or execute various example logical blocks described with reference to content disclosed in embodiments of this application. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 210 in this embodiment of this application may be the communication apparatus shown in FIG. 4.

FIG. 22 is a diagram of a structure of a communication system according to an embodiment of this application. As shown in FIG. 22, the communication system may include a source access network device 220, a target access network device 221, and a terminal 222. It should be noted that FIG. 22 is merely an example of an accompanying drawing. Network elements included in the communication system shown in FIG. 22 and a quantity of the network elements are not limited in this embodiment of this application.

The source access network device 220 has a function of the source access network device in any one of the methods in FIG. 12 to FIG. 18A and FIG. 18B. The target access network device 221 has a function of the target access network device in any one of the methods in FIG. 12 to FIG. 18A and FIG. 18B. The terminal 222 has a function of the terminal in any one of the methods in FIG. 12 to FIG. 18A and FIG. 18B.

An embodiment of this application further provides a computer-readable storage medium. All or some of the processes in the foregoing method embodiments may be implemented by a computer program instructing related hardware. The program may be stored in the computer-readable storage medium. When the program is executed, the processes of the foregoing method embodiments may be included. The computer-readable storage medium may be an internal storage unit of the terminal apparatus according to any one of the foregoing embodiments, for example, including a data transmitting end and/or a data receiving end. For example, the computer-readable storage medium may be a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or some of the procedures in the foregoing method embodiments may be implemented by the computer instructions instructing related hardware (such as a computer, a processor, a network device, and a terminal). A program may be stored in the foregoing computer-readable storage medium.

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists. A and B may be singular or plural. To facilitate description of the technical solutions in embodiments of this application, in embodiments of this application, terms such as "first" and "second" may be used to distinguish between technical features having same or similar functions. The terms such as "first" and "second" do not limit a quantity and an execution sequence, and the terms such as "first" and "second" do not indicate a definite difference. In embodiments of this application, terms such as "example" or "for example" are used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

In embodiments of this application, "first", "second", "third", "A", "B", "C", "D", and the like are used for distinguishing between technical features described by them. There is no chronological order or no size order between the technical features described by "first", "second", "third", "A", "B", "C", and "D".

It should be understood that in the embodiments of this application, "B corresponding to A" indicates that B is associated with A. For example, B may be determined based on A. It should be further understood that determining B based on A does not mean that B is determined based only on A. B may alternatively be determined based on A and/or other information. In addition, in embodiments of this application, "connection" means various connection manners such as a direct connection or an indirect connection, for implementing communication between devices. This is not limited in embodiments of this application.

In embodiments of this application, unless otherwise specified, "transmission" (transmit/transmission) refers to bidirectional transmission, and includes a sending action and/or a receiving action. Specifically, "transmission" in embodiments of this application includes data sending, data receiving, or data sending and data receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Division into the modules in embodiments ofthis application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

All or a part of the technical solutions provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a wireless control apparatus, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A multicast/broadcast service communication method, wherein the method comprises:
determining, by a first network element, a quality of service flow identifier QFI of a multicast/broadcast service; and
sending, by the first network element, the QFI to at least two session management function network elements.

2. The method according to claim 1, wherein
the session management function network element is a multicast/broadcast-session management function MB-SMF or a session management function SMF.

3. The method according to claim 1 or 2, wherein the first network element is any one of the following network elements: a network exposure function NEF, a multicast/broadcast service function MBSF, a network element obtained after an NEF and an MBSF are co-deployed, or an unstructured data storage function UDSF.

4. The method according to any one of claims 1 to 3, wherein the determining, by a first network element, a quality of service flow identifier QFI of a multicast/broadcast service comprises:
obtaining, by the first network element from an application server, information about the multicast/broadcast service, and determining the QFI of the multicast/broadcast service based on the information about the multicast/broadcast service; or
determining, by the first network element, the QFI of the multicast/broadcast service based on a policy and charging control PCC rule of the multicast/broadcast service.

5. The method according to claim 4, wherein the information about the multicast/broadcast service comprises:
identifier information of the multicast/broadcast service, and/or requirement information of the multicast/broadcast service.

6. The method according to any one of claims 1 to 5, wherein the sending, by the first network element, the QFI to at least two session management function network elements comprises:
sending, by the first network element, the QFI to the at least two session management function network elements by using a PCF.

7. A multicast/broadcast service communication method, wherein the method comprises:
receiving, by a first session management function network element from a first network element, a quality of service flow identifier QFI of a multicast/broadcast service; and
sending, by the first session management function network element based on the QFI, the QFI and a quality of service profile QoS profile to a first access network device.

8. The method according to claim 7, wherein the method further comprises:
receiving, by a second session management function network element from the first network element, the QFI of the multicast/broadcast service; and
sending, by the second session management function network element, the QFI and a QoS profile to a second access network device based on the QFI, wherein the QoS profile sent by the second session management function network element to the second access network device is the same as the QoS profile sent by the first session management function network element to the first access network device.

9. The method according to claim 8, wherein
the second access network device is connected to a user plane function UPF managed by the second session management function network element, and the first access network device is connected to a UPF managed by the first session management function network element.

10. A communication system, wherein the communication system comprises:
a first network element, configured to determine a quality of service flow identifier QFI of a multicast/broadcast service, and send the QFI to at least two session management function network elements;
a first session management function network element, configured to receive the QFI from the first network element, and send the QFI and a quality of service profile QoS profile to a first access network device based on the QFI; and
a second session management function network element, configured to receive the QFI from the first network element, and send the QFI and a QoS profile to a second access network device based on the QFI, wherein
the QoS profile sent by the first session management function network element to the first access network device is the same as the QoS profile sent by the second session management function network element to the second access network device.

11. A multicast/broadcast service communication method, wherein the method comprises:
obtaining, by a source access network device, first configuration information, wherein the first configuration information is used by a terminal to receive, after the terminal is handed over to a target access network device, data that is of a multicast/broadcast service and that is transmitted on a multicast/broadcast session; and
sending, by the source access network device, the first configuration information to the terminal.

12. The method according to claim 11, wherein
a transmission mode of the target access network device is a single-cell point-to-multipoint SC-PTM mode.

13. The method according to claim 12, wherein
the first configuration information is SCPTMConfiguration information, the SCPTMConfiguration information comprises single-cell multicast traffic channel SC-MTCH information, and the SC-MTCH information comprises information mbmsSessionInfo about the multicast/broadcast session and a group-radio network temporary identifier g-RNTI.

14. The method according to claim 11, wherein
a transmission mode of the target access network device is a multicast/broadcast single frequency MBSFN mode.

15. The method according to claim 14, wherein
the first configuration information is MBSFNAreaConfiguration information, the MBSFNAreaConfiguration information comprises physical multicast channel PMCH information, the PMCH information comprises a PMCH configuration pmch-Config and a multicast/broadcast session list mbms-SessionInfoList, and the mbms-SessionInfoList comprises information about the multicast/broadcast session.

16. The method according to any one of claims 11 to 15, wherein the obtaining, by a source access network device, first configuration information comprises:
receiving, by the source access network device, the first configuration information, wherein the first configuration information is carried in a handover request response or a handover command.

17. The method according to claim 16, wherein the receiving, by the source access network device, the first configuration information comprises:
receiving, by the source access network device, the first configuration information from a mobility management network element.

18. The method according to claim 17, wherein the method further comprises:
sending, by the source access network device, information about the multicast/broadcast service to the target access network device; or
sending, by the source access network device, information about the multicast/broadcast service to the mobility management network element.

19. The method according to claim 16, wherein the receiving, by the source access network device, the first configuration information comprises:
receiving, by the source access network device, the first configuration information from the target access network device.

20. The method according to claim 19, wherein the method further comprises:
sending, by the source access network device, information about the multicast/broadcast service to the target access network device.

21. The method according to claim 18 or 20, wherein the information about the multicast/broadcast service comprises:
identifier information of the multicast/broadcast service, and/or quality of service QoS information of the multicast/broadcast service.

22. The method according to any one of claims 11 to 21, wherein the method further comprises:
determining, by the source access network device, the target access network device based on a measurement report of the terminal and/or multicast/broadcast capability information of an access network device.

23. The method according to claim 22, wherein the measurement report comprises the identifier information of the multicast/broadcast service, and the method further comprises:
sending, by the source access network device, the identifier information of the multicast/broadcast service to the mobility management network element or the target access network device.

24. A multicast/broadcast service communication method, wherein the method comprises:
allocating, by a target access network device, a resource of a multicast/broadcast session to a terminal, wherein the multicast/broadcast session is for transmitting data of a multicast/broadcast service; and
sending, by the target access network device, first configuration information, wherein the first configuration information represents the resource of the multicast/broadcast session, and the first configuration information is used by the terminal to receive, after the terminal is handed over to the target access network device, the data that is of the multicast/broadcast service and that is transmitted on the multicast/broadcast session.

25. The method according to claim 24, wherein
a transmission mode of the target access network device is a single-cell point-to-multipoint SC-PTM mode.

26. The method according to claim 25, wherein
the first configuration information is SCPTMConfiguration information, the SCPTMConfiguration information comprises single-cell multicast traffic channel SC-MTCH information, and the SC-MTCH information comprises information mbmsSessionInfo about the multicast/broadcast session and a group-radio network temporary identifier g-RNTI.

27. The method according to claim 24, wherein
a transmission mode of the target access network device is a multicast/broadcast single frequency MBSFN mode.

28. The method according to claim 27, wherein
the first configuration information is MBSFNAreaConfiguration information, the MBSFNAreaConfiguration information comprises physical multicast channel PMCH information, the PMCH information comprises a PMCH configuration pmch-Config and a multicast/broadcast session list mbms-SessionInfoList, and the mbms-SessionInfoList comprises information about the multicast/broadcast session.

29. The method according to any one of claims 24 to 28, wherein the sending, by the target access network device, first configuration information comprises:
sending, by the target access network device, the first configuration information to a mobility management network element; or
sending, by the target access network device, the first configuration information to a source access network device.

30. The method according to any one of claims 24 to 29, wherein the first configuration information is carried in a handover request response or a handover command.

31. The method according to any one of claims 24 to 30, wherein the method further comprises:
receiving, by the target access network device, information about the multicast/broadcast service; and
the allocating, by a target access network device, a resource of a multicast/broadcast session to a terminal comprises: allocating, by the target access network device, the resource of the multicast/broadcast session to the terminal based on the information about the multicast/broadcast service.

32. The method according to claim 31, wherein the information about the multicast/broadcast service comprises:
identifier information of the multicast/broadcast service, and/or quality of service QoS information of the multicast/broadcast service.

33. A multicast/broadcast service communication method, wherein the method comprises:
receiving, by a terminal, first configuration information from a source access network device, wherein the first configuration information represents a resource of a multicast/broadcast session, and the first configuration information is used by the terminal to receive, after the terminal is handed over to a target access network device, data that is of a multicast/broadcast service and that is transmitted on the multicast/broadcast session; and
receiving, by the terminal by using the multicast/broadcast session and based on the first configuration information, the data that is of the multicast/broadcast service and that is from the target access network device.

34. The method according to claim 33, wherein
a transmission mode of the target access network device is a single-cell point-to-multipoint SC-PTM mode.

35. The method according to claim 34, wherein
the first configuration information is SCPTMConfiguration information, the SCPTMConfiguration information comprises single-cell multicast traffic channel SC-MTCH information, and the SC-MTCH information comprises information mbmsSessionInfo about the multicast/broadcast session and a group-radio network temporary identifier g-RNTI.

36. The method according to claim 33, wherein
a transmission mode of the target access network device is a multicast/broadcast single frequency MBSFN mode.

37. The method according to claim 36, wherein
the first configuration information is MBSFNAreaConfiguration information, the MBSFNAreaConfiguration information comprises physical multicast channel PMCH information, the PMCH information comprises a PMCH configuration pmch-Config and a multicast/broadcast session list mbms-SessionInfoList, and the mbms-SessionInfoList comprises information about the multicast/broadcast session.

38. The method according to any one of claims 33 to 37, wherein the method further comprises:
sending, by the terminal, a measurement report to the source access network device, wherein the measurement report comprises identifier information of the multicast/broadcast service.

39. The method according to any one of claims 33 to 38, wherein
the first configuration information is carried in a handover request response or a handover command.

40. A communication system, wherein the communication system comprises:
a target access network device, configured to allocate a resource of a multicast/broadcast session to a terminal, and send first configuration information, wherein the multicast/broadcast session is for transmitting data of a multicast/broadcast service, the first configuration information represents the resource of the multicast/broadcast session, and the first configuration information is used by the terminal to receive the multicast/broadcast session after the terminal is handed over to the target access network device;
a source access network device, configured to obtain the first configuration information, and send the first configuration information to the terminal; and
the terminal, configured to receive the first configuration information from the source access network device, and receive, by using the multicast/broadcast session and based on the first configuration information, the data that is of the multicast/broadcast service and that is from the target access network device.

41. A communication apparatus, wherein the communication apparatus comprises one or more processors and a communication interface, and the one or more processors and the communication interface are configured to support the communication apparatus in performing the communication method according to any one of claims 1 to 6, the communication method according to any one of claims 7 to 9, the communication method according to any one of claims 11 to 23, the communication method according to any one of claims 24 to 32, or the communication method according to any one of claims 33 to 39.

42. A computer-readable storage medium, wherein the computer-readable storage medium comprises computer instructions, and when the computer instructions are run on a computer, the computer is enabled to perform the communication method according to any one of claims 1 to 6, the communication method according to any one of claims 7 to 9, the communication method according to any one of claims 11 to 23, the communication method according to any one of claims 24 to 32, or the communication method according to any one of claims 33 to 39.
